# EUROPEAN PATENT APPLICATION

(11) **EP 4 049 819 A1**
(43) Date of publication of application: **31.08.2022**
(21) Application number: 20878241.7
(22) Date of filing: 13.10.2020
(51) Int. Cl.: B29B 11/16, B29K 101/12

(54) **FIBER-REINFORCED RESIN SHEET, STACKED BODY OF SAME, AND METHOD FOR PRODUCING FIBER-REINFORCED RESIN MOLDED ARTICLE**

(30) Priority: 21.10.2019 JP 2019192111
(71) Applicant: Fukuvi Chemical Industry Co., Ltd., Fukui-shi, Fukui 918-8585 (JP)
(72) Inventor: NAKANO, Yui, Fukui-shi, Fukui 918-8585 (JP); SASAKI, Yasutaka, Fukui-shi, Fukui 918-8585 (JP)
(74) Representative: Müller-Boré & Partner Patentanwälte PartG mbB
(86) International application number: PCT/JP2020/038630
(87) International publication number: WO 2021/079787

(57) **Abstract**

A fiber-reinforced resin molded article is produced by pressing a plurality of thermoplastic base material sheets, each of which contains a plurality of reinforcing fibers, in a stacked state where the base material sheets are stacked so that the fiber directions (orientation direction of the reinforcing fibers) are alternated. Each base material sheet is provided with a cut including: a plurality of lengthwise cut lines that extend along a plurality of lengthwise reference lines which are parallel to the fiber direction; and a plurality of crosswise cut lines that extend along a plurality of crosswise reference lines which are parallel to a direction that is perpendicular to the fiber direction. A plurality of cut interruption parts for interrupting the lengthwise cut lines in the fiber direction are formed on the lengthwise reference lines. The cut interruption parts are arranged so that cut interruption parts on a first lengthwise reference line and cut interruption parts on a second lengthwise reference line are displaced from each other in the fiber direction.

## Description

### Technical Field

The present invention relates to a technique for producing a fiber-reinforced resin molded article from a sheet-like base material (fiber-reinforced resin sheet) containing a matrix resin and reinforcing fibers.

### Background Art

As a method for producing a fiber-reinforced resin molded article, one disclosed in Patent Literature 1 is known. The production method of Patent Literature 1 includes a step of preparing a base material (prepreg base material) in which a matrix resin is impregnated with unidirectionally arranged reinforcing fibers, a step of forming intermittent cuts crossing the reinforcing fibers on the entire surface of the prepared base material, a step of stacking the base materials having the cuts so that their fiber directions (orientation directions of the reinforcing fibers) are staggered, and a step of molding the stacked base materials into a desired shape by a heating type press molding machine.

In Patent Literature 1 described above, all the cuts formed in the base material are set in a direction crossing (cutting) the reinforcing fibers. This is because shortening of the fiber length of the reinforcing fiber facilitates the flow of the resin during the pressing and improves the degree of freedom of shape of the molded article.

However, according to the study of the inventor of the present application, it has been found that a sufficient degree of freedom of shape is not necessarily obtained even if all the cuts are formed so as to cross the reinforcing fibers as described above. Of course, if the number of cuts is increased and the fiber length is further shortened, the degree of freedom of shape is improved, but it impairs the reinforcing effect by the reinforcing fibers, and greatly reduces the strength of the molded article.

### Citation List

### Patent Literature

Patent Literature 1: JP 2008-207544 A

### Summary of Invention

The present invention has been made in view of the above circumstances, and an object thereof is to produce a fiber-reinforced resin molded article that can enhance the degree of freedom of shape of the molded article while enjoying a good reinforcing effect by reinforcing fibers.

In order to solve the above problems, a method for producing a fiber-reinforced resin molded article according to an aspect of the present invention includes: a first step of preparing a plurality of sheet-shaped base materials containing a thermoplastic matrix resin and a large number of reinforcing fibers impregnated with the matrix resin in a state of being oriented in a same direction; a second step of forming a cut of a predetermined pattern penetrating the base material in each of the plurality of prepared base materials; and a third step of stacking the plurality of base materials in which the cut is formed, in a state in which fiber directions, which are orientation directions of the reinforcing fibers contained in each of the base materials, are alternated, and molding the stacked base materials into a desired shape by pressing. Assuming that a direction perpendicular to the fiber direction is a fiber perpendicular direction, in the second step, as the cut, a plurality of cut lines are formed including a plurality of lengthwise cut lines extending along a plurality of lengthwise reference lines parallel to the fiber direction and aligned in the fiber perpendicular direction and a plurality of crosswise cut lines extending along a plurality of crosswise reference lines parallel to the fiber perpendicular direction and aligned in the fiber direction, and a plurality of cut interruption parts that interrupt the lengthwise cut lines in the fiber direction are formed on each of the lengthwise reference lines. Assuming that one of a pair of the lengthwise reference lines that are adjacent to each other is a first lengthwise reference line and another is a second lengthwise reference line, in the second step, the lengthwise cut lines are formed such that the cut interruption part on the first lengthwise reference line and the cut interruption part on the second lengthwise reference line are displaced from each other in the fiber direction.

A fiber-reinforced resin sheet according to another aspect of the present invention includes a thermoplastic matrix resin, and a large number of reinforcing fibers impregnated with the matrix resin in a state of being oriented in a same direction, and is formed with a cut having a predetermined pattern and penetrating in a thickness direction. Assuming that an orientation direction of the reinforcing fibers is a fiber direction and a direction perpendicular to the fiber direction is a fiber perpendicular direction, the cut includes a plurality of lengthwise cut lines extending along a plurality of lengthwise reference lines parallel to the fiber direction and aligned in the fiber perpendicular direction, and a plurality of crosswise cut lines extending along a plurality of crosswise reference lines parallel to the fiber perpendicular direction and aligned in the fiber direction. The plurality of lengthwise cut lines are interrupted from each other via a plurality of cut interruption parts formed on the lengthwise reference line. Assuming that one of a pair of the lengthwise reference lines that are adjacent to each other is a first lengthwise reference line and another is a second lengthwise reference line, the lengthwise cut lines are formed such that the cut interruption part on the first lengthwise reference line and the cut interruption part on the second lengthwise reference line are displaced from each other in the fiber direction.

A stacked body of a fiber-reinforced resin sheet according to yet another aspect of the present invention is a stacked body in which a plurality of the fiber-reinforced resin sheets described above are stacked. A plurality of the fiber-reinforced resin sheets are stacked in a state where the fiber directions are alternated, and thermally fused to one another.

According to the present invention, it is possible to enhance the degree of freedom of shape of a molded article while enjoying a reinforcing effect of the molded article by reinforcing fibers.

### Brief Description of Drawings

FIG. 1 is a flowchart showing an outline procedure of a method for producing a fiber-reinforced resin molded article according to a first embodiment of the present invention.
FIG. 2 is a view showing an outline configuration of a sheet production apparatus that prepares a UD sheet.
FIG. 3 is a perspective view showing a base material sheet cut out from a UD sheet.
FIG. 4 is a plan view showing a cut of a specific pattern formed on a base material sheet.
FIG. 5 is a partially enlarged view of FIG. 4.
FIGS. 6A to 6C are cross-sectional view for explaining a configuration of a heat press machine and a procedure of pressing using the heat press machine.
FIG. 7 is a perspective view for explaining a method of stacking base material sheets.
FIG. 8 is a view for explaining a second embodiment of the present invention, and is a plan view showing a cut of a specific pattern formed on a base material sheet.
FIG. 9 is a partially enlarged view of FIG. 8.
FIG. 10 is a perspective view showing a shape of a molded article molded for experiment.
FIG. 11 is a perspective view showing a method for stacking base material sheets in a third embodiment of the present invention.
FIG. 12 is a plan view corresponding to FIG. 11.
FIG. 13 is a plan view showing a modification (part 1) in which a cut pattern of a base material sheet is changed.
FIG. 14 is a plan view showing a modification (part 2) in which the cut pattern of the base material sheet is changed.
FIG. 15 is a plan view showing a modification (part 3) in which the cut pattern of the base material sheet is changed.
FIG. 16 is a plan view showing a modification (part 4) in which the cut pattern of the base material sheet is changed.
FIG. 17 is a plan view showing a modification (part 5) in which the cut pattern of the base material sheet is changed.
FIG. 18 is a plan view showing a cut pattern of a base material sheet in Comparative Example 1.

### Description of Embodiments

### [First Embodiment]

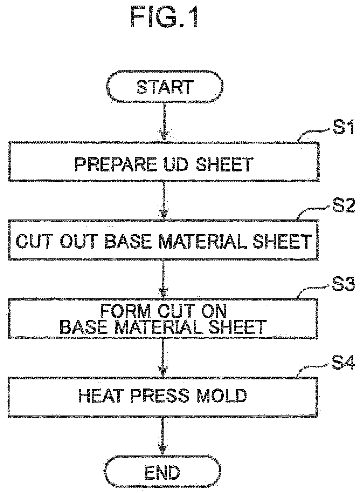

A method for producing a fiber-reinforced resin molded article according to the first embodiment of the present invention will be described below with reference to the drawings. In the present embodiment, the fiber-reinforced resin molded article is a synthetic resin molded article (composite molded article) containing reinforcing fibers, and is produced by steps (S1 to S4) shown in FIG. 1. That is, the method for producing a fiber-reinforced resin molded article in the present embodiment includes a step S1 of preparing a UD sheet, a step S2 of cutting out a plurality of base material sheets of a predetermined size from the UD sheet, a step S3 of forming a cut of a predetermined pattern in each of the base material sheets, and a step S4 of stacking the plurality of base material sheets and performing heat pressing. Details of each step are as follows.

### (1) Preparation of UD sheet

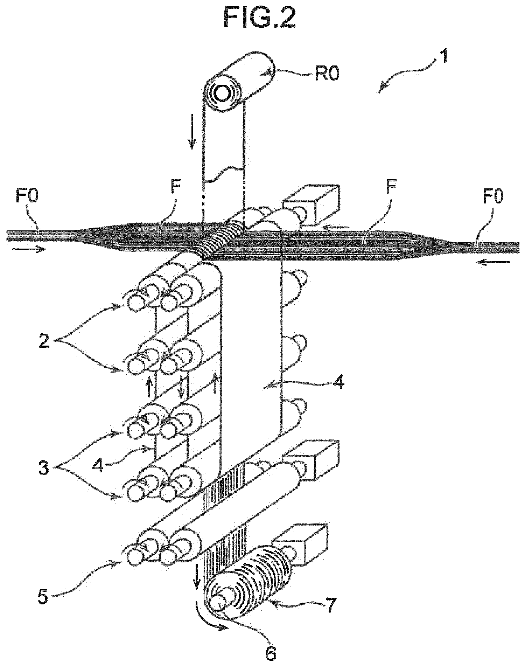

Step S1 is a step of preparing a UD sheet 7 shown in FIG. 2 (sheet preparation step). The UD sheet 7 prepared in this sheet preparation step S1 is a fiber-reinforced resin sheet (FRTP sheet) in which a resin sheet R0 made of a thermoplastic resin is impregnated with reinforcing fibers F.

As the reinforcing fibers F, carbon fibers, glass fibers, aramid fibers, ceramic fibers, and the like can be used. Among them, carbon fiber is advantageous in improving the strength, corrosion resistance, and the like of the molded article. As the carbon fiber, it is preferable to use a polyacrylonitrile (PAN)-based carbon fiber having particularly high strength.

As a material of the resin sheet R0, polypropylene, polyethylene, polystyrene, polyamide (nylon 6, nylon 66, nylon MXD6, nylon 9T, nylon 11, nylon 12, and the like), polyacetal, polycarbonate, acrylonitrile-butadiene-styrene copolymer (ABS), polyethylene terephthalate, polybutylene terephthalate, polyimide, polyamideimide, polyetherimide, polyethersulfone, polyphenylene sulfide, polyetherketone, polyetheretherketone, polyetherketoneketone, polysulfone, polyarylate, polyphenylsulfone, acrylic resin, fluorine-based resin, thermoplastic epoxy resin, liquid crystal polymer, and the like can be used. In addition, a polymer alloy obtained by mixing two or more of these thermoplastic resins may be used as the material of the resin sheet R0.

The UD sheet 7 can be continuously produced using a sheet production apparatus 1 shown in FIG. 2, for example. This sheet production apparatus 1 is an apparatus that continuously produces the UD sheet 7 from a fiber bundle F0, which is a bundle of reinforcing fibers, and the thermoplastic resin sheet R0.

Specifically, the sheet production apparatus 1 includes a plurality of pairs (two pairs in FIG. 2) of heating rollers 2 arranged vertically, a plurality of pairs (two pairs in FIG. 2) of cooling rollers 3 arranged vertically below the heating rollers 2, a pair of endless belts 4 wound around between the heating rollers 2 and the cooling rollers 3, a pair of draw-out rollers 5 located below the endless belts 4, and a winding bobbin 6 arranged below the draw-out rollers 5.

An opening mechanism (not illustrated) for opening and expanding the fiber bundle F0 in a band shape is provided in the vicinity of the heating roller 2 at the uppermost stage. By continuously opening the fiber bundle F0, this opening mechanism can form a large number of continuous reinforcing fibers F while spreading them in a thin band shape. The opening mechanism is only required to be any mechanism that can perform such a treatment. Various mechanisms can be used, such as a mechanism that taps the fiber bundle to spread it, a mechanism that blows the fiber bundle to spread it, and a mechanism that applies ultrasonic waves on the fiber bundle to spreading it.

In the example of FIG. 2, the opening mechanism has a mechanism that supplies the reinforcing fibers F having been opened to one surface of the resin sheet R0 and a mechanism that supplies the opened reinforcing fibers F to the other surface of the resin sheet R0. The former mechanism is provided so as to introduce the reinforcing fibers F between one surface of the resin sheet R0 and the heating roller 2 in contact with the surface, and the latter mechanism is provided so as to introduce the reinforcing fibers F between the other surface of the resin sheet R0 and the heating roller 2 in contact with the surface. However, the opening mechanism may supply the reinforcing fibers F only to one surface of the resin sheet R0.

The heating roller 2 is a high-temperature roller heated by an electric heater, a heating medium, or the like. The heating roller 2 heats the resin sheet R0 and the reinforcing fibers F introduced into both surfaces of the resin sheet R0 while sandwiching the resin sheet R0 and the reinforcing fibers F from both sides via the endless belt 4, thereby continuously impregnating the resin sheet R0 with the reinforcing fibers F. The resin sheet R0 is impregnated with the reinforcing fibers F in a state where the reinforcing fibers F are aligned in one direction (vertical direction in FIG. 2).

The cooling roller 3 is a low-temperature roller cooled by a cooling medium or the like. The cooling roller 3 fixes the reinforcing fibers F to the resin sheet R0 by cooling the resin sheet R0 impregnated with the reinforcing fibers F while sandwiching the resin sheet R0 from both sides via the endless belt 4. Due to this, the UD sheet 7 in which the resin sheet R0 and the reinforcing fibers F are integrated is molded.

The draw-out roller 5 is a roller that draws out the molded UD sheet 7 downward while applying tension to the UD sheet 7.

The winding bobbin 6 is a core material for winding the UD sheet 7. The bobbin 6 is rotationally driven by a drive source such as a motor, and sequentially winds up the UD sheet 7 drawn out by the draw-out roller 5 to gather the UD sheet 7 into a roll shape.

### (2) Cutting of base material sheet

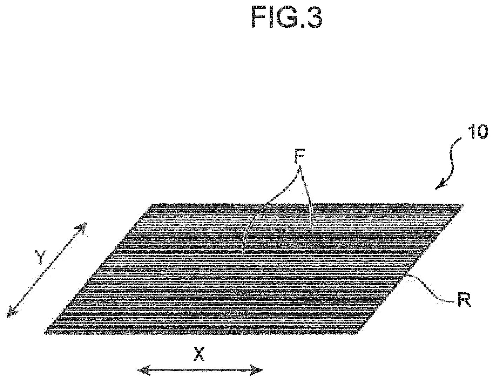

When the preparation of the UD sheet 7 is completed as described above, in the next step S2, a base material sheet 10 shown in FIG. 3 is cut out from the UD sheet 7 (cutout step). Specifically, in this cutout step S2, a plurality of rectangular base material sheets 10 are cut out from the UD sheet 7. Note that this cutout step S2 and the above-described sheet preparation step S1 correspond to the "first step" in the present invention. The base material sheet 10 corresponds to the "base material" or the "fiber-reinforced resin sheet" in the present invention.

Each base material sheet 10 has a matrix resin R and a large number of reinforcing fibers F impregnated with the matrix resin R. The matrix resin R is a thermoplastic resin derived from the resin sheet R0 (FIG. 2) described above. The reinforcing fibers F are impregnated with the matrix resin R in a state of being oriented in the same direction.

The arrow denoted by a reference sign X in FIG. 3 is a direction parallel to the orientation direction of the reinforcing fibers F in the base material sheet 10, and hereinafter, this is referred to as a fiber direction X. The arrow denoted by a reference sign Y in FIG. 3 is a direction perpendicular to the fiber direction X, and hereinafter, this is referred to as a fiber perpendicular direction Y. As shown in FIG. 3, the base material sheet 10 is formed in a rectangular shape having two sides parallel to the fiber direction X (facing the fiber perpendicular direction Y) and two sides parallel to the fiber perpendicular direction Y (facing the fiber direction X).

### (3) Formation of cut

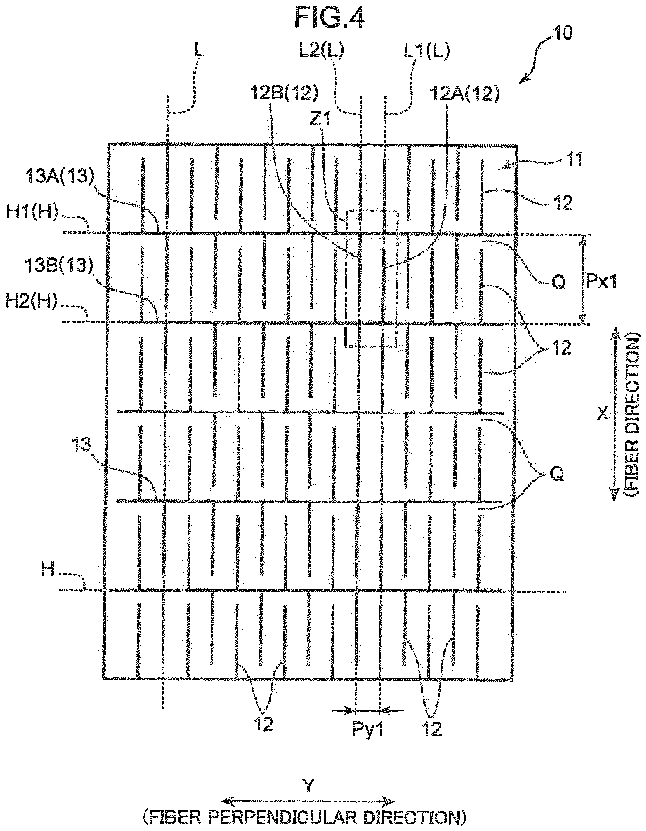

When the formation of the plurality of base material sheets 10 is completed as described above, in the next step S3, a cut 11 of a predetermined pattern as shown in FIG. 4 is formed in each base material sheet 10 (cut formation step). This cut formation step S3 corresponds to the "second step" in the present invention.

The formation of the cut 11 in the cut formation step S3 can be performed using a laser cutter using laser light, for example. However, the method of forming the cut 11 is not limited to the method using a laser cutter, and for example, the cut 11 can be formed using a mold blade (Thomson blade or etching blade) corresponding to the pattern of the cut 11, or the cut 11 can be formed using a rotary cutter.

In the example of FIG. 4, the cut 11 has a plurality of lengthwise cut lines 12 parallel to the fiber direction X and a plurality of crosswise cut lines 13 parallel to the fiber perpendicular direction Y. Each lengthwise cut line 12 and the crosswise cut lines 13 is a linear slit penetrating the base material sheet 10 in the thickness direction. In FIG. 4, illustration of the reinforcing fibers F contained in the base material sheet 10 is omitted in order to clearly show the cut lines 12 and 13.

As shown in FIG. 4, assuming that a plurality of reference lines extending parallel to the fiber direction X on the base material sheet 10 and aligned at a constant pitch Py1 in the fiber perpendicular direction Y are defined as lengthwise reference lines L, the plurality of lengthwise cut lines 12 are all formed on the lengthwise reference lines L. On each lengthwise reference line L, the plurality of lengthwise cut lines 12 are intermittently formed at regular intervals, and a cut interruption part Q, which is a part where no cut line is formed, is formed between the lengthwise cut lines 12. In other words, on each lengthwise reference line L, the plurality of lengthwise cut lines 12 and the plurality of cut interruption parts Q are alternately and linearly arranged. The lengths of the lengthwise cut lines 12 are all the same.

Assuming that a plurality of reference lines extending in parallel with the fiber perpendicular direction Y on the base material sheet 10 and aligned at a constant pitch Px1 in the fiber direction X are defined as crosswise reference lines H, the plurality of crosswise cut lines 13 are all formed on the crosswise reference lines H. Each crosswise cut line 13 is formed so as to continuously extend from an end part on one side to an end part on the other side in the fiber perpendicular direction Y in the base material sheet 10. More specifically, each crosswise cut line 13 is formed so as to linearly extend along the fiber perpendicular direction Y in most of the range of the base material sheet 10 excluding the vicinity of the outline thereof (two sides facing in the fiber perpendicular direction Y). The reason for not forming the crosswise cut line 13 in the vicinity of the outline is to avoid the base material sheet 10 from being completely cut by the crosswise cut line 13.

The cut interruption parts Q are arranged in a staggered manner along an arbitrary crosswise cut line 13. Specifically, the cut interruption parts Q are formed so as to alternately appear on one side and the other side in the fiber direction X of an arbitrary crosswise cut line 13 along the crosswise cut line 13.

The staggered arrangement of the cut interruption parts Q can be rephrased as follows. That is, when one of the pair of adjacent lengthwise reference lines L selected arbitrarily is a first lengthwise reference line L1 and the other is a second lengthwise reference line L2, the cut interruption parts Q are formed such that the cut interruption part Q on the first lengthwise reference line L1 and the cut interruption part Q on the second lengthwise reference line L2 are displaced from each other in the fiber direction X.

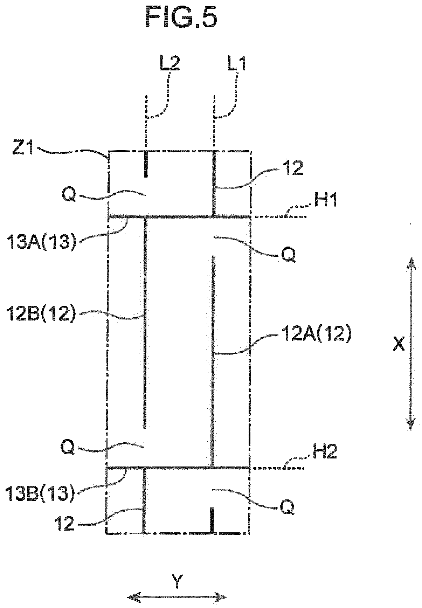

In order to explain in more detail the staggered arrangement of the cut interruption parts Q as described above, a cut pattern appearing in a region Z1 (a region surrounded by an alternate long and short dash line) in FIG. 4 is taken. FIG. 5 is an enlarged view showing a cut pattern in the region Z1. The region Z1 includes a region where the first lengthwise reference line L1 and the second lengthwise reference line L2 described above, a first crosswise reference line HI which is one of the pair of adjacent crosswise reference lines H, and a second crosswise reference line H2, which is the other of the pair of adjacent crosswise reference lines H, intersect one another. In the following explanation, one of the pair of crosswise cut lines 13 included in the region Z1, i.e., the crosswise cut lines 13 on the first and second crosswise reference lines HI and H2, is referred to as a first crosswise cut line 13A, and the other is referred to as a second crosswise cut line 13B. One of the pair of lengthwise cut lines 12 included in the region Z1, i.e., the lengthwise cut lines 12 on the first and second lengthwise reference lines L1 and L2 located between the first crosswise cut line 13A and the second crosswise cut line 13B, is referred to as a first lengthwise cut line 12A, and the other is referred to as a second lengthwise cut line 12B.

As shown in FIGS. 4 and 5, the first lengthwise cut line 12A intersects only the second crosswise cut line 13B, and the second lengthwise cut line 12B intersects only the first crosswise cut line 13A. In other words, the first lengthwise cut line 12A is interrupted from the first crosswise cut line 13A via the cut interruption part Q and is formed so as to be continuous with (intersect) the second crosswise cut line 13B. On the other hand, the second lengthwise cut line 12B is interrupted from the second crosswise cut line 13B via the cut interruption part Q and is formed so as to be continuous with (intersect) the first crosswise cut line 13A. Due to this, the cut interruption parts Q are arranged such that the positions in the fiber direction X are alternately changed between the adjacent portion of the first crosswise cut line 13A and the adjacent portion of the second crosswise cut line 13B.

In the base material sheet 10, the lengthwise and crosswise cut lines 12 and 13 (cut 11) are formed so that the cut pattern in the region Z1 as described above repeatedly appears in a region other than the region Z1. Due to this, the staggered arrangement of the cut interruption parts Q described above is achieved over the entire base material sheet 10.

### (4) Pressing

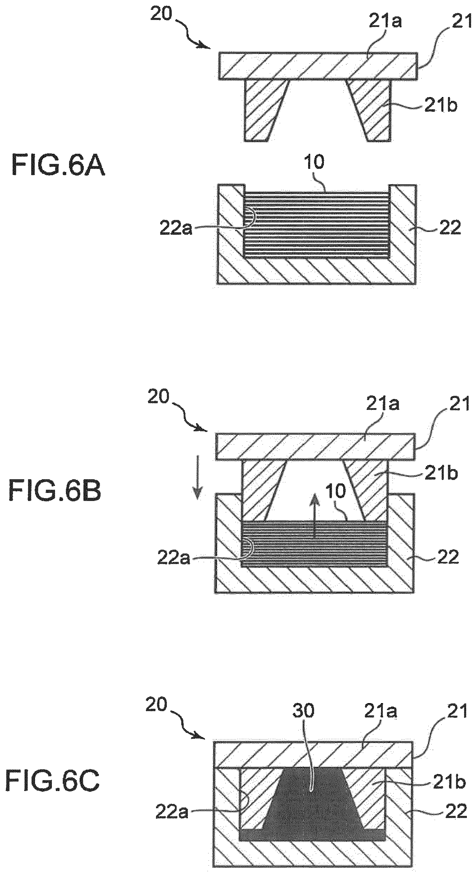

When the formation of the cut 11 is completed as described above, in the next step S4, a fiber-reinforced resin molded article is molded from the base material sheet 10 using a heat press machine 20 shown in FIGS. 6A to 6C (pressing step). This pressing step S4 corresponds to the "third step" in the present invention.

In the pressing step S4, first, as shown in FIG. 6A, the plurality of base material sheets 10 are stacked in the thickness direction and arranged in a mold of the heat press machine 20. Each base material sheet 10 is a base material sheet obtained through the above-described cut formation step S3, and has the cut 11 shown in FIG. 4. When the plurality of base material sheets 10 are arranged in the mold of the heat press machine 20 as described above, it is preferable to cut off an end part (peripheral edge) of each base material sheet 10 in advance. Such cutting off of the end part smooths the movement of the reinforcing fibers F during main process to be described later, and improves the formativeness.

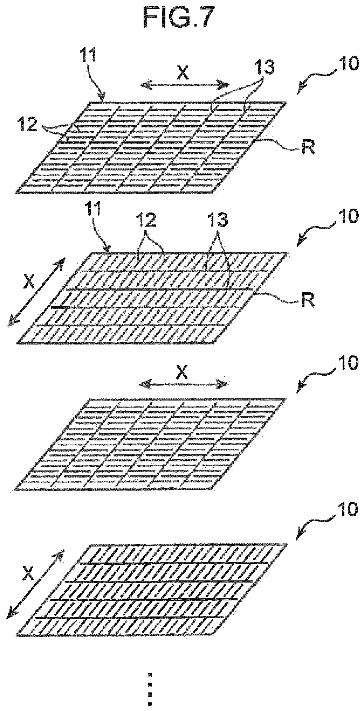

FIG. 7 shows a state in which the plurality of base material sheets 10 are stacked. As shown in this figure, the plurality of base material sheets 10 are stacked such that the orientation directions (fiber directions X) of the reinforcing fibers F contained in the base material sheets 10 are alternated.

In the example of FIG. 7, the base material sheets 10 are stacked such that the fiber direction X is displaced by 90 degrees in order of the first layer, the second layer, the third layer..., in other words, the fiber direction X of the n-th base material sheet 10 and the fiber direction X of the n + 1-th base material sheet 10 are perpendicular to each other in plan view. However, when the base material sheets 10 are stacked, the orientation of the base material sheets 10 is only required to be changed so that the fiber directions X of the base material sheets 10 are not all aligned in the same direction, and various stacking methods can be adopted other than the example shown in FIG. 7. For example, the base material sheets 10 may be stacked such that the fiber directions X are displaced by 45 degrees (in other words, the fiber direction X changes sequentially between 0°, 45°, 90°, and 135°) in order of the first layer, the second layer, the third layer.....

As shown in FIGS. 6A to 6C, the heat press machine 20 includes a punch 21 and a die 22. In the present embodiment, the die 22 is a mold (female mold) having a recess 22a capable of receiving the base material sheet 10, and the punch 21 is a mold (male mold) having a base part 21a and an insertion part 21b that protrudes from the lower surface of the base part 21a. As shown in FIG. 7, the base material sheets 10 stacked so that the fiber directions X are alternated are arranged in the recess 22a of the die 22. The die 22 is provided with a heater (not illustrated) for heating the base material sheet 10 in the recess 22a to a high temperature.

When the setting of the base material sheets 10 in the heat press machine 20 (die 22) is completed as described above, next, main process (mold clamping) of pressing the punch 21 into the die 22 while heating the base material sheets 10 is performed. That is, the base material sheets 10 are raised to a predetermined temperature through the heating of the die 22 by the heater, and the punch 21 is pressed downward by a pressurizing device (not illustrated) in a state where the insertion part 21b of the punch 21 is inserted into the recess 22a of the die 22 to pressurize the base material sheet 10 (see FIG. 6B). The heating and pressurization of the base material sheets 10 softens and deforms the base material sheets 10.

FIG. 6C shows a state in which the punch 21 is pressed to the stroke end. In this state, the space (i.e., the molding cavity) defined between the punch 21 and the die 22 is filled with the deformed base material sheets 10. That is, when the base material sheets 10 are deformed into a shape corresponding to the molding cavity, a molded article 30 (fiber-reinforced resin molded article) made of a fiber-reinforced resin is obtained. After a predetermined cooling period, the molded article 30 is taken out from the die 22 with the punch 21 taken out from the die 22.

### (5) Action and effect

As described above, in the first embodiment of the present invention, the plurality of base material sheets 10 each cut out from the UD sheet 7 are formed with the cut 11 of a predetermined pattern, and the plurality of base material sheets 10 each having the cut 11 are pressed by the heat press machine 20 in a state where the base material sheets are stacked so that the fiber directions X (orientation directions of the reinforcing fibers F) thereof are alternated. The cut 11 includes the plurality of lengthwise cut lines 12 along the fiber direction X and the plurality of crosswise cut lines 13 along the fiber perpendicular direction Y. The lengthwise cut lines 12 are interrupted in the fiber direction X by the cut interruption parts Q arranged in a staggered manner (such that positions in the fiber direction X are different from one another) along the crosswise cut lines 13. According to such a configuration, there is an advantage that it is possible to enhance the degree of freedom of shape of a molded article while enjoying the reinforcing effect by the reinforcing fiber F.

That is, in the first embodiment, since the plurality of base material sheets 10 stacked so that the fiber directions X are alternated are pressed, the directions of the reinforcing fibers F contained in the processed molded article are not uniformly determined, and pseudo isotropy is imparted to the mechanical properties of the molded article. As a result, a preferable reinforcing effect by the reinforcing fibers F can be obtained.

Since the cut 11 including the lengthwise cut lines 12 extending in the fiber direction X and the crosswise cut lines 13 extending in the fiber perpendicular direction Y is formed on the base material sheet 10 before the pressing, the flow of the resin during the pressing can be facilitated to increase the degree of freedom of shape of the molded article. Specifically, due to the crosswise cut lines 13 cutting the reinforcing fibers F in the base material sheet 10, the fiber length of the reinforcing fibers F is shortened, and as a result, the degree to which the reinforcing fibers F inhibit the flow of the resin can be reduced. Due to this, the formativeness of the base material sheets 10, i.e., the deformability of the base material sheets 10 to be deformed following the shape (molding cavity) of the press mold can be improved, and the degree of freedom of shape of the molded article can be satisfactorily ensured. On the other hand, the lengthwise cut lines 12 do not cut the reinforcing fibers F, but reduce the integrity of the base material sheets 10, which eventually contributes to improvement of formativeness. By forming such the lengthwise cut lines 12 in addition to the crosswise cut lines 13, the number of crosswise cut lines 13 required to obtain the required formativeness can be reduced as compared with the case where only the crosswise cut lines 13 are formed. Due to this, it becomes unnecessary to extremely subdivide the reinforcing fibers F, so that a good reinforcing effect by the reinforcing fibers F can be obtained.

In particular, in the first embodiment, since the cut interruption parts Q that interrupt the lengthwise cut lines 12 in the fiber direction X are arranged in a staggered manner, a kind of randomness can be imparted to the formation pattern of the lengthwise cut lines 12 and the cut interruption parts Q. Due to this, for example, as compared with a case where the lengthwise cut lines are formed such that the cut interruption parts Q are aligned in a straight line along the fiber perpendicular direction Y, the flow of the resin during pressing can be further smoothed, and the formativeness can be more effectively improved.

In the first embodiment, since the crosswise cut lines 13 are formed so as to continuously extend over substantially the entire width of the base material sheet 10, the number of crosswise cut lines 13 on the entire base material sheet 10 can be reduced as compared with the case where the crosswise cut lines 13 are intermittently formed along the fiber perpendicular direction Y. This makes it possible to increase the degree of freedom of shape of the molded article while simplifying the step of forming the cut 11 (cut formation step).

### [Second Embodiment]

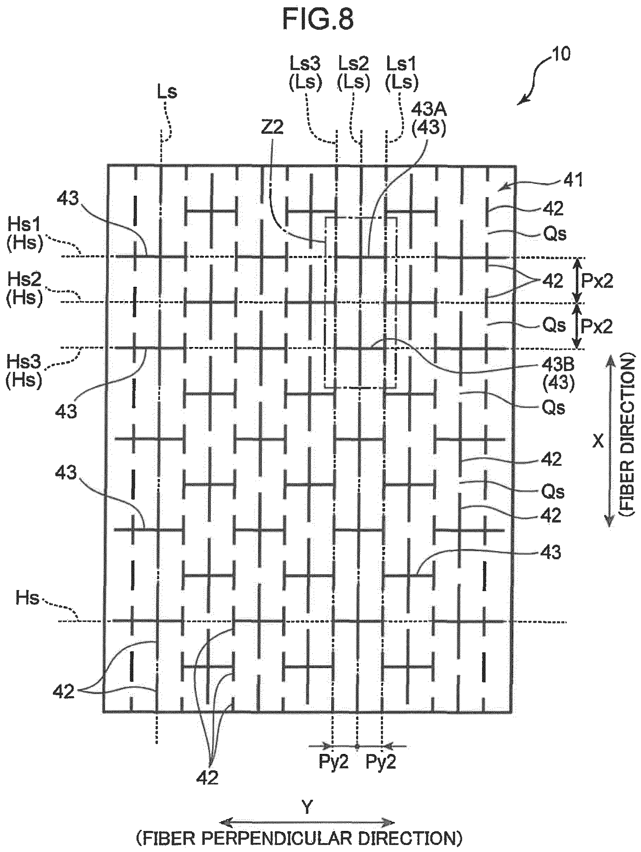

FIG. 8 is a view for explaining a method for producing a fiber-reinforced resin molded article according to the second embodiment of the present invention. The method for producing of the second embodiment is different from that of the first embodiment described above in the pattern for forming a cut 41 on the base material sheet 10 in the cut formation step, but the contents of the other steps (sheet preparation step, cutout step, and pressing step) are the same. Therefore, only characteristic patterns of the cut 41 in the second embodiment will be described below, and description of other points will be omitted.

The cut 41 has a plurality of lengthwise cut lines 42 parallel to the fiber direction X and a plurality of crosswise cut lines 43 parallel to the fiber perpendicular direction Y. Each of the lengthwise cut lines 42 and the crosswise cut lines 43 is a linear slit penetrating the base material sheet 10 in the thickness direction.

As shown in FIG. 8, assuming that a plurality of reference lines extending parallel to the fiber direction X on the base material sheet 10 and aligned at a constant pitch Py2 in the fiber perpendicular direction Y are defined as lengthwise reference lines Ls, the plurality of lengthwise cut lines 42 are all formed on the lengthwise reference lines Ls. On each lengthwise reference line Ls, the plurality of lengthwise cut lines 42 are intermittently formed at regular intervals (intermittently), and a cut interruption part Qs, which is a part where no cut line is formed, is formed between the lengthwise cut lines 42. In other words, on each lengthwise reference line Ls, the plurality of lengthwise cut lines 42 and the plurality of cut interruption parts Qs are alternately and linearly arranged.

In the second embodiment, unlike the first embodiment described above, the length of the lengthwise cut line 42 is different between adjacent lengthwise reference lines Ls. For example, when the length of each lengthwise cut line 42 on a first lengthwise reference line Ls1, which is one of the plurality of lengthwise reference lines Ls, is short, the length of each lengthwise cut line 42 on a second lengthwise reference line Ls2 adjacent to this first lengthwise reference line Ls1 is made longer than that on the first lengthwise reference line Ls1. On a third lengthwise reference line Ls3 adjacent to the second lengthwise reference line Ls2, the length of each lengthwise cut line 42 is shortened again to be the same as that on the first lengthwise reference line Ls1.

Assuming that a plurality of reference lines extending in parallel with the fiber perpendicular direction Y on the base material sheet 10 and aligned at a constant pitch Px2 in the fiber direction X are defined as crosswise reference lines Hs, the plurality of crosswise cut lines 43 are all formed on the crosswise reference lines Hs. However, in the second embodiment, unlike the first embodiment described above, the plurality of crosswise cut lines 43 are intermittently formed at certain intervals on each crosswise reference line Hs.

The plurality of crosswise cut lines 43 of each crosswise reference line Hs are arranged such that the positions on the fiber perpendicular direction Y are displaced from each other (i.e., in a staggered manner). That is, when one of a pair of adjacent crosswise reference lines Hs selected arbitrarily is defined as a first crosswise reference line Hs1 and the other is defined as a second crosswise reference line Hs2, each crosswise cut line 43 on the first crosswise reference line Hs1 and each crosswise cut line 43 on the second crosswise reference line Hs2 have different positions from each other in the fiber perpendicular direction Y. On the other hand, when a crosswise reference line adjacent to the second crosswise reference line Hs2 is defined as a third crosswise reference line Hs3, each crosswise cut line 43 on this third crosswise reference line Hs and each crosswise cut line 43 on the first crosswise reference line Hs1 have the same position with each other in the fiber perpendicular direction Y. In other words, each crosswise cut line 43 on the first crosswise reference line Hs1 does not face each crosswise cut line 43 on the second crosswise reference line Hs2 in the fiber direction X, but faces each crosswise cut line 43 on the third crosswise reference line Hs3 in the fiber direction X.

The plurality of cut interruption parts Qs on each lengthwise reference line Ls are arranged such that the positions on the fiber direction X are displaced from each other (i.e., in a staggered manner). For example, each cut interruption part Qs on the first lengthwise reference line Ls1 and each cut interruption part Qs on the second lengthwise reference line Ls2 have different positions in the fiber direction X. On the other hand, the position of each cut interruption part Qs on the first lengthwise reference line Ls1 in the fiber direction X is the same as that of each cut interruption part Qs on the third lengthwise reference line Ls3.

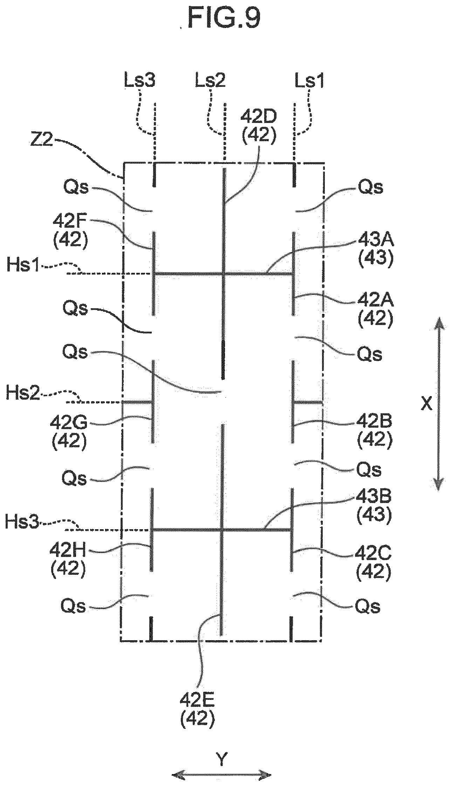

In order to explain in more detail the staggered arrangement of the cut interruption parts Q as described above, a cut pattern appearing in a region Z2 (a region surrounded by an alternate long and short dash line) in FIG. 8 is taken. FIG. 9 is an enlarged view showing a cut pattern in the region Z2. The region Z2 includes a region where the first to third lengthwise reference lines Ls1 to Ls3 and the first to third crosswise reference lines Hs1 to Hs3 intersect one another. In the following explanation, one of the pair of crosswise cut lines 43 included in the region Z2 is referred to as a first crosswise cut line 43A, and the other is referred to as a second crosswise cut line 43B. The first crosswise cut line 43A is located on the first crosswise reference line Hs1, and the second crosswise cut line 43B is located on the third crosswise reference line Hs3. These first and second crosswise cut lines 43A and 43B face each other in the fiber direction X without interposing another crosswise cut line.

As shown in FIG. 9, the region Z2 includes three lengthwise cut lines 42A to 42C located on the first lengthwise reference line Ls1. That is, on the first lengthwise reference line Ls1, the first lengthwise cut line 42A intersecting the first crosswise cut line 43A, the third lengthwise cut line 42C intersecting the second crosswise cut line 43B, and the second lengthwise cut line 42B positioned between these first and third lengthwise cut lines 42A and 42C and intersecting none of the first and second crosswise cut lines 43A and 43B are formed. The first lengthwise cut line 42A and the second lengthwise cut line 42B are interrupted via the cut interruption part Qs, and the second lengthwise cut line 42B and the third lengthwise cut line 42C are interrupted via the cut interruption part Qs.

On the second lengthwise reference line Ls2, a fourth lengthwise cut line 42D intersecting the first crosswise cut line 43A and a fifth lengthwise cut line 42E intersecting the second crosswise cut line 43B are formed. The fourth lengthwise cut line 42D and the fifth lengthwise cut line 42E are interrupted via the cut interruption part Qs.

On the third lengthwise reference line Ls3, a sixth lengthwise cut line 42F intersecting the first crosswise cut line 43A, an eighth lengthwise cut line 42H intersecting the second crosswise cut line 43B, and a seventh lengthwise cut line 42G located between the sixth and eighth lengthwise cut lines 42F and 42H and intersecting none of the first and second crosswise cut lines 43A and 43B are formed. The sixth lengthwise cut line 42F and the seventh lengthwise cut line 42G are interrupted via the cut interruption part Qs, and the seventh lengthwise cut line 42G and the eighth lengthwise cut line 42H are interrupted via the cut interruption part Qs.

The lengths of the first to third lengthwise cut lines 42A to 42C are the same as the lengths of the sixth to eighth lengthwise cut lines 42F to 42H, respectively. On the other hand, the lengths of the fourth and fifth lengthwise cut lines 42D and 42E are relatively long. The position of the cut interruption part Qs between the fourth and fifth lengthwise cut lines 42D and 42E (i.e., on the second lengthwise reference line Ls2) in the fiber direction X is different from that of any of the cut interruption part Qs on the first lengthwise reference line Ls1 and the cut interruption part Qs on the third lengthwise reference line Ls3. Conversely, each cut interruption part Qs on the first lengthwise reference line Ls1 and each cut interruption part Qs on the third lengthwise reference line Ls3 have the same position in the fiber direction X.

In the base material sheet 10, the lengthwise and crosswise cut lines 42 and 43 (cut 41) are formed so that the cut pattern in the region Z2 as described above repeatedly appears in a region other than the region Z2. Due to this, the staggered arrangement of the cut interruption parts Qs described above is achieved over the entire base material sheet 10.

The second embodiment of the present invention described above is different from the first embodiment described above in the pattern of the cut 41 formed in the base material sheet 10, but is the same as the first embodiment in that the reinforcing fibers F are cut at appropriate positions by the crosswise cut lines 43, and that the cut interruption parts Qs that interrupt the lengthwise cut lines 42 are arranged in a staggered manner so as not to be aligned in a straight line along the fiber perpendicular direction Y. Therefore, also in this second embodiment, similarly to the first embodiment described above, it is possible to enhance the degree of freedom of shape of a molded article while enjoying the reinforcing effect by the reinforcing fiber F.

In particular, in the second embodiment, since not only the cut interruption parts Qs that interrupt the lengthwise cut lines 42 are arranged in a staggered manner but also the crosswise cut lines 43 are arranged in a staggered manner, as compared with the case where the crosswise cut lines 13 continuous over substantially the entire width of the base material sheet 10 are formed as in the first embodiment described above, the randomness of the cut pattern and the continuity of the material increase, and as a result, the strength of the molded article can be further enhanced.

### <Examples 1 and 2>

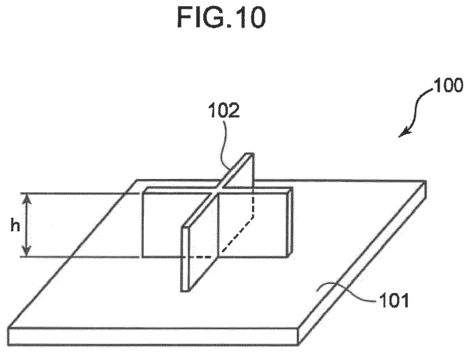

Next, resultants obtained by actually producing fiber-reinforced resin molded articles by applying the methods according to the first and second embodiments described above will be described as Examples 1 and 2. In the present example, an experimental molded article 100 shown in FIG. 10 was produced through each step shown in FIG. 1. The experimental molded article 100 includes a base part 101 having a flat plate shape and a rib 102 having a cross shape in plan view protruding from a central region of an upper surface of the base part 101. In the production of this experimental molded article 100, 20 base material sheets 10 in which a matrix resin made of nylon 6 (PA6) was impregnated with PAN-based carbon fibers as reinforcing fibers were stacked and pressed as described in the following production conditions. When the base material sheets 10 were stacked, the base material sheets 10 were arranged such that the orientation direction (fiber direction) of the carbon fibers became four directions of 0°, 45°, 90°, and 135°. In the pressing, heat pressurization in which the base material sheets 10 were heated to 270°C and were applied with a pressure of 5 MPa for 15 minutes and cold pressurization in which the base material sheets 10 were cooled to 30°C and were applied with a pressure of 10 MPa for 20 minutes were performed in this order.

Apart from the experimental molded article 100, a flexural test piece for measuring flexural characteristics (flexural strength and flexural modulus to be described later) was prepared. In preparing this flexural test piece, 48 base material sheets 10 were stacked. Other conditions are the same as those at the time of producing the experimental molded article 100.

### (Production conditions)

Matrix resin .... Nylon 6
Reinforcing fiber .... PAN-based carbon fiber
Number of stacked sheets .... 20 sheets (experimental molded article) / 48 sheets (flexural test piece)
Fiber direction .... 4 directions (0°, 45°, 90°, 135°)
Heat pressurization .... 270°C, 5 MPa, 15 min
Cold pressurization .... 30°C, 10 MPa, 20 min

**[Table 1]**

| | Example 1 | Example 2 | Comparative Example 1 | Comparative Example 2 |
|---|---|---|---|---|
| Cut | Pattern 1 (FIG. 4) | Pattern 2 (FIG. 8) | Pattern 3 (FIG. 18) | Absent |
| Rib height | 35 mm | 37 mm | 22 mm | 3 mm |
| Formativeness | Good | Good | Poor | Poor |
| Flexural strength [MPa] | 497.0 | 637.9 | 515.8 | 792.0 |
| Flexural modulus [GPa] | 37.8 | 38.0 | 43.3 | 49.2 |

Table 1 shows the results of the performance test on each experimental molded article 100 produced from a plurality of types of base material sheets having different cut patterns under the above production conditions and on the corresponding flexural test piece. Example 1, Example 2, Comparative Example 1, and Comparative Example 2 described in Table 1 were produced from base material sheets having different cut patterns (or presence or absence of cutting), and the characteristics of each example are as follows.

### (Example 1)

Example 1 was produced using the base material sheet 10 having the cut 11 of the pattern of FIG. 4 corresponding to the first embodiment. The pitch Py1 of the lengthwise reference lines L (the distance between the adjacent lengthwise reference lines L) was set to 5 mm, and the pitch Px1 of the crosswise reference lines H (the distance between the adjacent crosswise reference lines H) was set to 20 mm.

### (Example 2)

Example 2 was produced using the base material sheet 10 having the cut 41 of the pattern of FIG. 8 corresponding to the second embodiment. The pitch Py2 of the lengthwise reference line Ls was set to 5 mm, and the pitch Px2 of the crosswise reference line Hs was set to 10 mm.

### (Comparative Example 1)

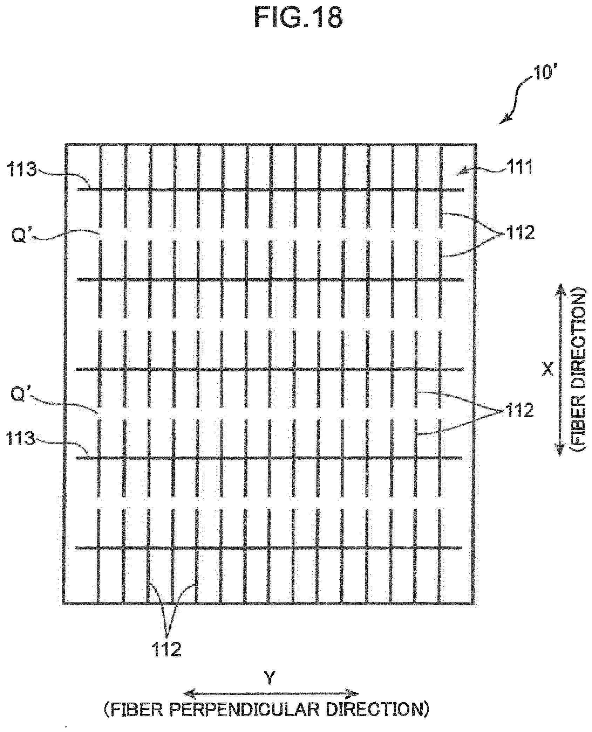

Comparative Example 1 was produced using a base material sheet 10' having a cut 111 of the pattern shown in FIG. 18. The cut 111 has a plurality of lengthwise cut lines 112 extending in the fiber direction X and aligned at intervals of 5 mm in the fiber perpendicular direction Y, and a plurality of crosswise cut lines 113 extending in the fiber perpendicular direction Y and aligned at intervals of 20 mm in the fiber direction X. The crosswise cut lines 113 are formed so as to extend continuously over substantially the entire width of the base material sheet 10'. The lengthwise cut lines 112 are formed intermittently along the fiber direction X, in other words, the lengthwise cut lines 112 and cut interruption parts Q' are alternated. The cut interruption parts Q' are formed so as to be aligned in a straight line along the fiber perpendicular direction Y.

### (Comparative Example 2)

Comparative Example 2 was produced using a base material sheet in which no cut was formed.

For each of the experimental molded articles 100 according to Examples 1 and 2 and Comparative Examples 1 and 2 and the flexural test pieces corresponding thereto, a height (rib height) h of the rib 102 shown in FIG. 10 was measured, and the flexural strength and the flexural modulus were measured. The results are shown in Table 1 above. The rib height h in Table 1 is the maximum height of the rib 102. In each example, since the rib 102 is not necessarily formed at a uniform height, in such a case, the maximum height of the rib 102 is defined as the rib height h. The fact that the rib height h is large means that the formativeness is good. That is, since all of Examples 1 and 2 and Comparative Examples 1 and 2 were produced using the same press mold, the difference in the rib height h can be regarded as a difference in followability of the material to the molding cavity.

As shown in Table 1 above, the flexural strength is larger in descending order of Comparative Example 2, Example 2, Comparative Example 1, and Example 1. That is, the flexural strength of Comparative Example 2 is the largest, the flexural strength of Example 2 is the second largest, and the flexural strength of Comparative Example 1 is the third largest. The flexural strength of Example 1 is the smallest.

The flexural modulus is larger in descending order of Comparative Example 2, Comparative Example 1, Example 2, and Example 1. However, the difference in flexural modulus between Example 2 and Example 1 is very small.

The rib height h is larger in descending order of Example 2, Example 1, Comparative Example 1, and Comparative Example 2. Although there is no large difference between the rib height h of Example 2 and the rib height h of Example 1 (37 mm and 35 mm), the rib height h of Comparative Example 1 is 22 mm, which is significantly smaller than those of Examples 1 and 2 (11 mm smaller than that of Example 1). Furthermore, the rib height h of Comparative Example 2 was reduced to only 3 mm.

From the above results, the characteristics of each example can be considered as follows.

In Comparative Example 2, the flexural strength and the flexural modulus are both maximum, which indicates that the reinforcing effect by the carbon fiber is most exhibited. This is considered to be because there is no cut for cutting the carbon fiber (the fiber length of the carbon fiber is uniformly long). However, an increase in length of the carbon fiber hinders the flow of the resin during pressing, thereby leading to deterioration of formativeness. This explains why the formativeness of Comparative Example 2 is remarkably poor (to the extent that formation of the rib 102 is almost impossible). As described above, in Comparative Example 2, although the highest mechanical strength is obtained, the degree of freedom of shape as a molded article is too low to withstand practical use.

In Comparative Example 1, the rib height h is larger than that in Comparative Example 2, and the formativeness is improved. This is considered to be due to the action of the cut 111 (FIG. 18) formed on the base material sheet 10'. However, the rib height h is still low as compared with Examples 1 and 2, and it is difficult to conclude that there is a degree of freedom of shape that can withstand practical use. In addition, the mechanical strength is not so high, and in particular, the flexural strength is lower than not only Comparative Example 2 but also Example 2. Thus, in Comparative Example 1, although the formativeness is insufficient, the mechanical strength is not particularly excellent, and it cannot be said that Comparative Example 1 is practical.

On the other hand, Examples 1 and 2 are sufficiently large in the rib height h, and secure good formativeness. On the other hand, although the mechanical strength is decreased as compared with at least Comparative Example 2 due to the trade-off with the improvement in formativeness, the value is sufficiently large as compared with a resin without reinforcing fibers, and it can be concluded that Examples 1 and 2 have sufficient strength as a fiber-reinforced resin. In particular, Example 2 has a flexural strength higher than that of Comparative Example 1, and is also excellent in terms of mechanical strength.

### [Third Embodiment]

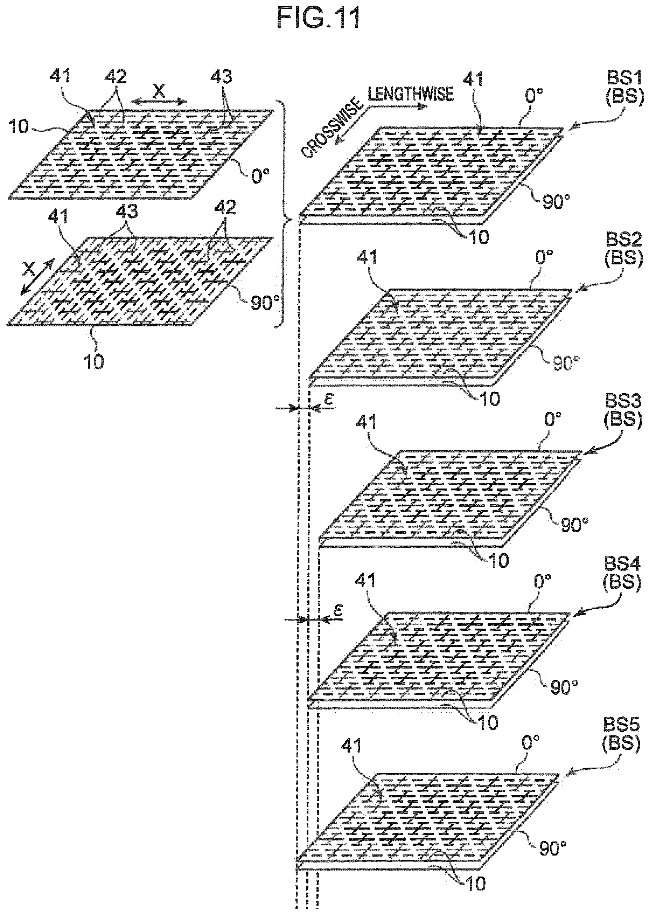

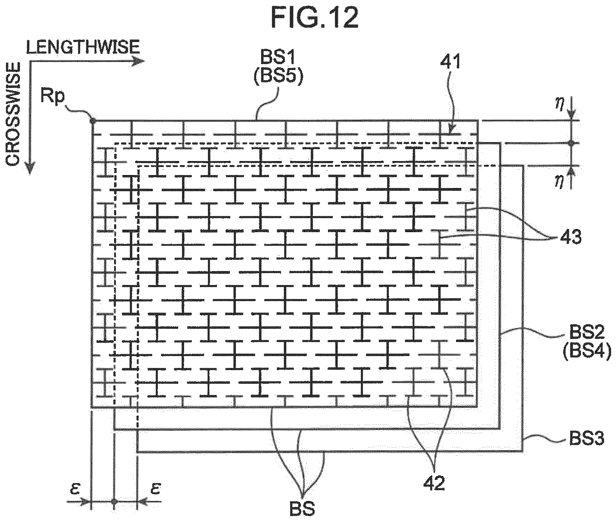

FIGS. 11 and 12 are views for explaining a method for producing a fiber-reinforced resin molded article according to the third embodiment of the present invention. In this third embodiment, a molded article is produced using the same base material sheet 10 as used in the second embodiment (base material sheet on which the cut 41 having the pattern shown in FIG. 8 is formed), but a method of stacking the base material sheets 10 in the pressing step is different from those in the first and second embodiments. Therefore, hereinafter, a method of stacking the base material sheets 10 in the pressing step will be mainly described.

In the third embodiment, at the time of the pressing step, a plurality of sets of base material sheet sets BS1, BS2 .... in which the plurality of base material sheets 10 are stacked are formed, and the formed base material sheet sets BS1, BS2 .... are stacked while displacing their positions in plan view little by little (offset stacking). Hereinafter, when the n-th base material sheet set from the top is specified and referred to, it is referred to as an n-th base material sheet set BSn. For example, the uppermost base material sheet set BS1 is referred to as a first base material sheet set BS1, and the second base material sheet set BS2 from the top is referred to as a second base material sheet set BS2. On the other hand, when the base material sheet sets BS1, BS2, .... are collectively referred to, they are simply referred to as a base material sheet set BS.

In the third embodiment, each base material sheet set BS is includes two base material sheets 10 stacked in a state where the fiber directions X are perpendicular to each other (intersect at an angle of 90 degrees in plan view). That is, in each base material sheet set BS, when the angle of the fiber direction X (in other words, the extending direction of the lengthwise reference line Ls shown in FIG. 8) of the upper base material sheet 10 is 0°, the lower base material sheet 10 is superimposed on the lower side of the upper base material sheet 10 in a state where the angle of the fiber direction X is 90°. The two base material sheets 10 constituting each base material sheet set BS have the same rectangular outline, and the four corners thereof coincide with one another. In other words, the two base material sheets 10 constituting each base material sheet set BS are stacked in a state where the fiber directions X are perpendicular to one another and the four corners coincide with one another. The base material sheet set BS corresponds to the "base material set" or the "sheet set" in the present invention. The directions of 0° and 90°, which are the fiber directions X of the two base material sheets 10 in the base material sheet set BS, correspond to the "first direction" and the "second direction", respectively, in the present invention.

Here, in plan view, the direction coinciding with the fiber direction X of the upper base material sheet 10 in the first base material sheet set BS1 is defined as a lengthwise direction, and a direction perpendicular to the lengthwise direction is defined as a crosswise direction. The position of a specific corner (upper left corner in FIG. 12; the same applies hereinafter) in the first base material sheet set BS1 is defined as a reference position Rp. As shown in FIGS. 11 and 12, the second base material sheet set BS2 is superimposed on the lower side of the first base material sheet set BS1 in a state where the specific corner is displaced by a distance ε in the lengthwise direction and a distance η in the crosswise direction from the reference position Rp in plan view. The third base material sheet set BS3 is superimposed on the lower side of the second base material sheet set BS2 in a state where the specific corner is displaced by a distance 2ε in the lengthwise direction and a distance 2η in the crosswise direction from the reference position Rp in plan view. The fourth base material sheet set BS4 is superimposed on the lower side of the third base material sheet set BS3 in a state where the specific corner is displaced by the distance ε in the lengthwise direction and the distance η in the crosswise direction from the reference position Rp in plan view. The fifth base material sheet set BS5 is superimposed on the lower side of the fourth base material sheet set BS4 in a state in which the specific corner coincides with the reference position Rp in plan view. Thus, the first to fifth base material sheet sets BS1 to BS5 are arranged such that the misalignment amount in the lengthwise direction (crosswise direction) from the reference position Rp increases or decreases from 0 → ε → 2ε → ε → 0 (0 → η → 2η → η → 0) in order from the top. In other words, the plurality of sets of base material sheet sets BS are stacked while displacing the position in the lengthwise direction by the distance ε and displacing the position in the crosswise direction by the distance η. In this case, the distance ε corresponds to the "first distance" in the present invention, and the distance η corresponds to the "second distance" in the present invention.

Although not illustrated, also in the case where a sixth or subsequent base material sheet set is present, the misalignment amount from the reference position Rp is increased or decreased according to the same law as described above. For example, the misalignment amount of the sixth base material sheet set is ε (η), the misalignment amount of a seventh base material sheet set is 2ε (2η), the misalignment amount of an eighth base material sheet set is ε (η), and the misalignment amount of a ninth base material sheet set is 0.

The distance ε, which is the lengthwise misalignment amount between the base material sheet sets BS adjacent vertically, is set to a value different from the pitch Px2 (see FIG. 8) of the crosswise reference lines Hs in each base material sheet 10. The distance η, which is the crosswise misalignment amount between the base material sheet sets BS adjacent vertically, is set to a value different from the pitch Py2 (see FIG. 8) of the lengthwise reference lines Ls in each base material sheet 10. In this case, the pitch Px2 of the crosswise reference lines Hs corresponds to the "second pitch" in the present invention, and the pitch Py2 of the lengthwise reference lines Ls corresponds to the "first pitch" in the present invention.

By setting the misalignment amount (distances ε and η) as described above, all (four) base material sheets 10 included in the base material sheet set BS adjacent vertically have a relationship in which the lengthwise cut lines 42 and the crosswise cut lines 43 do not linearly superimpose each other in plan view. That is, in the base material sheet sets BS vertically adjacent to each other, the lengthwise cut lines 42 of an arbitrary base material sheet 10 do not linearly superimpose the lengthwise cut lines 42 of any other base material sheet 10, and the crosswise cut lines 43 of an arbitrary base material sheet 10 do not linearly superimpose the crosswise cut lines 43 of any other base material sheet 10.

More preferably, the misalignment amount (distances ε and η) is set to a value not only not coinciding with the pitches Py2 and Px2 but also not coinciding with 1/2 of the pitches Py2 and Px2. That is, the distance ε, which is the lengthwise misalignment amount, is set to a value that does not coincide with any of the pitch Px2 of the crosswise reference lines Hs and 1/2 of the pitch Px2. Similarly, the distance η, which is the crosswise misalignment amount, is set to a value that does not coincide with any of the pitch Py2 of the lengthwise reference lines Ls and 1/2 of the pitch Py2. For example, when the pitch Py2 is 5 mm and the pitch Px2 is 10 mm, both the distances ε and η can be set to 3 mm. Due to this, in the three sets of base material sheet sets BS in which the misalignment amounts in the lengthwise direction (crosswise direction) are 0, ε, and 2ε (0, η, 2η), a relationship is obtained in which the lengthwise cut lines 42 (crosswise cut lines 43) of all the base material sheets 10 included in the sets do not linearly superimpose one another in plan view.

The plurality of sets of base material sheet sets BS stacked by the method as described above is pressed using the same heat press machine (see FIGS. 6A to 6C) as in the first embodiment described above, and a predetermined molded article is molded through the pressing.

In the third embodiment of the present invention described above, during the pressing step, a plurality of sets of base material sheet sets BS including a plurality of (here, two) base material sheets 10 stacked in a state in which the fiber directions X are alternated are formed, and the formed base material sheet sets BS are stacked while displacing the position in plan view, so that the positions where the reinforcing fibers F are cut by the lengthwise cut lines 42 or the crosswise cut lines 43 can be varied for each base material sheet set BS. Therefore, when the stacked base material sheet sets BS are pressed, the reinforcing effect by the reinforcing fibers F can be more uniformly exhibited in the molded article, and the strength of the molded article can be effectively improved.

Specifically, in the third embodiment, the lengthwise misalignment amount between the base material sheet sets BS adjacent vertically is set to the distance ε, different from the pitch Px2 of the crosswise reference lines Hs, and the crosswise misalignment amount is set to the distance η, different from the pitch Py2 of the lengthwise reference lines Ls. Therefore, it is possible to effectively avoid the lengthwise cut lines 42 and the crosswise cut lines 43 from linearly superimposing each other in plan view between the base material sheet sets BS adjacent vertically, and to appropriately exhibit the above-described effects.

In the third embodiment, on the premise that all of the plurality of sets of base material sheet sets BS have the same shape, these plurality of sets of base material sheet sets BS are stacked while displacing the position of a specific corner (upper left corner in FIG. 12) in each base material sheet set BS lengthwise and crosswise in plan view. However, it is sufficient that cut lines (lengthwise cut lines 42 and crosswise cut lines 43) are stacked so as not to linearly superimpose each other at least between the base material sheet sets BS vertically adjacent, and the method for doing so is not limited to the method according to the third embodiment. For example, it is conceivable to displace the relative position of the cut lines with respect to the outline for each base material sheet set BS. By doing so, for example, while stacking a plurality of sets of base material sheet sets BS in a state where the four corners coincide with one another, it is possible to avoid that the cut lines from linearly superimposing between the adjacent base material sheet sets BS. Stacking by such a method also corresponds to an aspect of the method (offset stacking) of stacking the base material sheet sets BS while displacing their positions in plan view.

In the third embodiment, each base material sheet set BS is formed by stacking two base material sheets 10 in a state where the fiber directions X are perpendicular to each other. However, at the time of forming each base material sheet set BS, the base material sheets 10 are only required to be stacked while changing the orientation so that the fiber directions X are not all aligned in the same direction. The base material sheets 10 may be stacked so that the fiber directions X are displaced by 45 degrees, for example, in order of the first layer, the second layer, the third layer .... (in other words, the fiber direction X changes sequentially between 0°, 45°, 90°, and 135°).

### <Example 3>

Next, a resultant obtained by actually producing a fiber-reinforced resin molded article by applying the method according to the third embodiment described above will be described as Example 3. In Example 3, a flexural test piece was produced by each step shown in FIG. 1 using 48 base material sheets 10 having the cut 41 (lengthwise cut lines 42 and crosswise cut lines 43) of the pattern shown in FIG. 8. In the production of the flexural test piece, as described in the following production conditions, nylon 9T (PA9T) was used as a matrix resin of each base material sheet 10, and PAN-based carbon fibers were used as reinforcing fibers. The pitch Py2 of the lengthwise reference lines Ls (the distance between the adjacent lengthwise reference lines Ls) was set to 5 mm, and the pitch Px2 of the crosswise reference lines Hs (the distance between the adjacent crosswise reference lines Hs) was set to 10 mm. When the base material sheets 10 were stacked, each base material sheet 10 was arranged such that the orientation directions (fiber directions) of the carbon fibers were alternated and the positions in plan view were displaced for each set of two. Specifically, as shown in FIGS. 11 and 12, 24 sets of base material sheet sets BS including two base material sheets 10 in which the orientation directions (fiber directions) of the carbon fibers were set to 0° and 90° were formed, and these 24 sets of base material sheet sets BS were stacked such that the lengthwise and crosswise misalignment amounts in plan view sequentially changed as 0 mm → 3 mm → 6 mm → 3 mm → 0 mm → 3 mm → 6 mm → 3 mm → 0 mm → 3 mm in order from top (offset stacking). In the pressing, heat pressurization in which the base material sheet 10 was heated to 300°C and was applied with a pressure of 3 MPa for 15 minutes and cold pressurization in which the base material sheet 10 was cooled to 30°C and was applied with a pressure of 10 MPa for 10 minutes were performed in this order.

### (Production conditions)

Matrix resin .... Nylon 9T
Reinforcing fiber .... PAN-based carbon fiber
Number of stacked sheets .... 48 sheets (24 sets)
Fiber direction .... two directions (0° and 90°)
Offset stacking .... present (offset by 3 mm for each set of two)
Heat pressurization .... 300°C, 3 MPa, 15 min
Cold pressurization .... 30°C, 10 MPa, 10 min

**[Table 2]**

| | Example 3 | Example 4 |
|---|---|---|
| Cut | Pattern 2 (FIG. 8) | Pattern 2 (FIG. 8) |
| Offset stacking | Present | Absent |
| Flexural strength [MPa] | 783.7 | 688.6 |
| Flexural modulus [GPa] | 58.4 | 59.5 |

Table 2 shows the results of the performance test on the flexural test piece according to Example 3. In Example 4 in Table 2, the lengthwise and crosswise positional misalignment amounts when the base material sheet sets BS are stacked are all zero. That is, Example 4 is different from Example 3 only in that offset stacking is not adopted, and all other conditions are the same.

As shown in Table 2, Example 4 was improved in flexural strength as compared with the previous Example 2 (Table 1) prepared under similar conditions except for the difference in matrix resin. Example 3 has a flexural strength higher than that of Example 4. That is, the flexural strength of Example 3 in which the offset stacking is adopted is higher than the flexural strength of Example 4 in which the offset stacking is not adopted. On the other hand, regarding the flexural modulus, no significant difference was observed between Example 3 and Example 4. From the above, it has been found that offset stacking brings about an effect of improving mechanical strength.

### [Modification]

In each of the above embodiments, in the pressing step S4, the plurality of base material sheets 10 are stacked and arranged in the mold of the heat press machine 20, and main process (mold clamping) of pressing the punch 21 into the die 22 is performed in this state. However, it is also possible to form a stacked body in which the plurality of base material sheets 10 are integrally stacked before the pressing step S4. Specifically, a stacked body of fiber-reinforced resin sheets is formed by stacking and thermally fusing a plurality of (for example, 10 or more) base material sheets 10 so that their fiber directions X alternate. At the time of forming the stacked body, it is also possible to adopt offset stacking as described in the third embodiment. That is, it is also possible to form the stacked body by forming a plurality of sets of base material sheet sets BS (FIG. 11 and FIG. 12) including a plurality of base material sheets 10 stacked in a state where the fiber directions X are alternated, and stacking and thermally fusing the formed base material sheet sets BS while displacing the base material sheet sets BS lengthwise and crosswise in plan view.

The stacked body can have a sufficiently large thickness as compared with one base material sheet 10. Therefore, for example, when producing a relatively thick molded article, it is possible to reduce the number of times of stacking materials in the mold of the heat press machine 20, and it is possible to improve the work efficiency of the pressing step S4. When the base material sheets 10 are thermally fused, the matrix resins R of the base material sheets 10 are only required to be bonded to one another with such strength that the plurality of stacked base material sheets 10 are not naturally separated in the process of transportation or the like. In thermal fusion, it is preferable to apply, to the base material sheet 10, temperature and pressure that are not excessively high that are suitable for such requirements.

In each of the above embodiments, the pressing using the heat press machine 20 including the punch 21 and the die 22 is adopted in the pressing step S4, but the molding method applicable to the present invention may be any method capable of pressurization and heating, and is not limited to the method using the heat press machine 20. As an example, it is possible to apply pressing such as heat and cool press molding, hot stamping molding, and vacuum heat press molding. In particular, the heat and cool press molding is suitable for exhibiting the formativeness of the base material of the present invention.

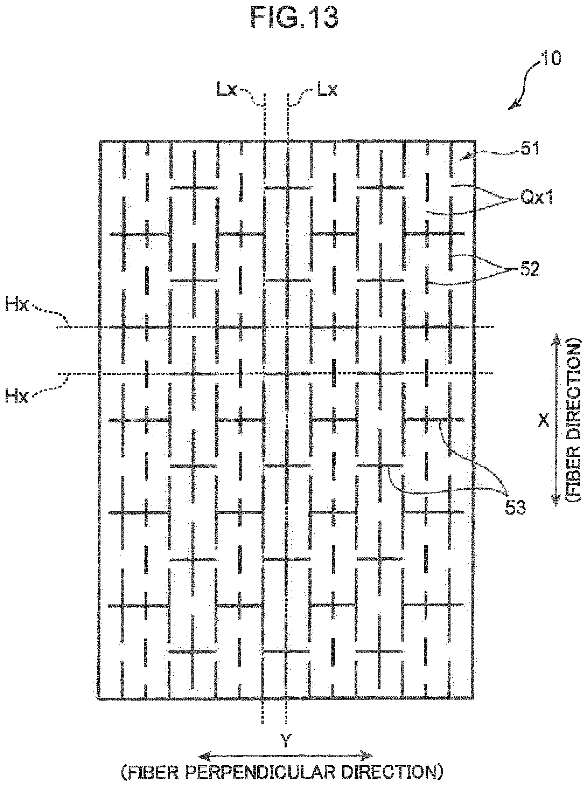

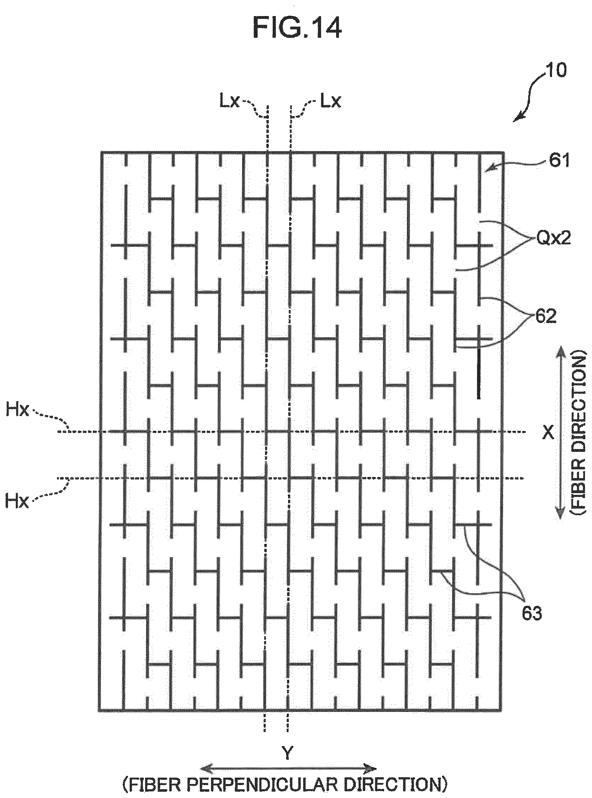

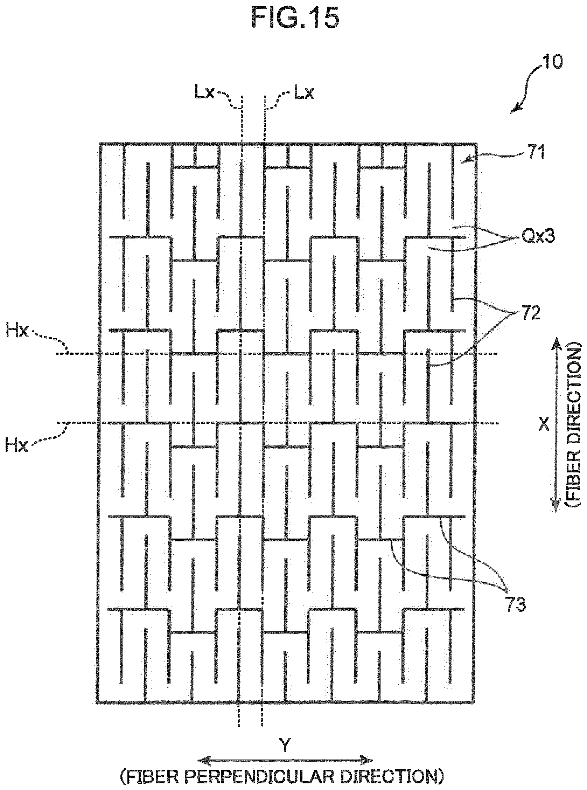

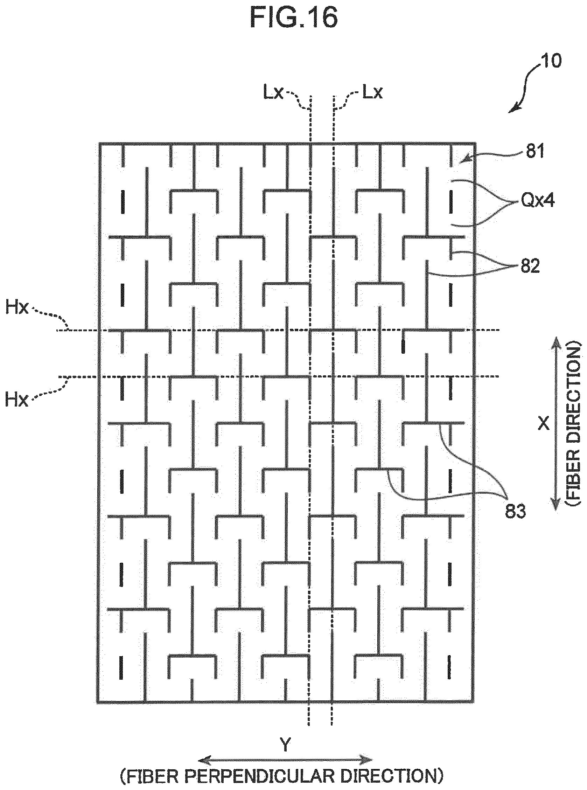

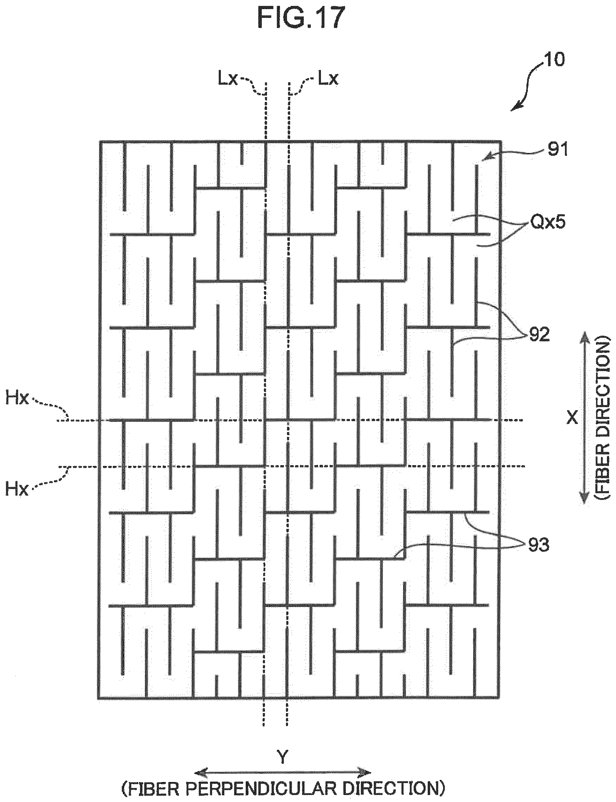

In each of the above embodiments, the cut 11 shown in FIG. 4 and the cut 41 shown in FIG. 8 are exemplified as an example of the cut to be formed on the base material sheet 10. However, any cut may be used as long as it includes a plurality of lengthwise cut lines parallel to the fiber direction and a plurality of crosswise cut lines parallel to the fiber perpendicular direction, in which the cut interruption parts are arranged in a staggered pattern. The present invention is not limited to the pattern shown in FIGS. 4 and 8. As an example, it is conceivable to form cut of the patterns shown in FIGS. 13 to 17. Cuts 51, 61, 71, 81, and 91 shown in the figures respectively have a plurality of lengthwise cut lines 52, 62, 72, 82, and 92 extending along a plurality of lengthwise reference lines Lx parallel to the fiber direction X, and a plurality of crosswise cut lines 53, 63, 73, 83, and 93 extending along a plurality of crosswise reference lines Hx parallel to the fiber perpendicular direction Y. Cut interruption parts Qx1, Qx2, Qx3, Qx4, and Qx5 that interrupt the lengthwise cut lines 52, 62, 72, 82, and 92, respectively, in the fiber direction X are arranged such that the cut interruption part on an arbitrary lengthwise reference line and the cut interruption part on a lengthwise reference line adjacent thereto are displaced from each other in the fiber direction X (i.e., in a staggered manner).

In the third embodiment, a plurality of base material sheet sets BS including two base material sheets 10 stacked in a state in which the fiber directions X are perpendicular to each other are formed, and the formed base material sheet sets BS are stacked while displacing their positions in a plan view. However, it is not always necessary to perform positional misalignment for each base material sheet set BS. For example, while the position of the base material sheet 10 in which the fiber direction X is 90° is fixed, only the position of the base material sheet 10 in which the fiber direction X is 0° may be variable.

### [Summary]

The invention included in the above-described embodiments and modifications thereof is summarized as follows.

A method for producing a fiber-reinforced resin molded article according to an aspect of the present invention includes: a first step of preparing a plurality of sheet-shaped base materials containing a thermoplastic matrix resin and a large number of reinforcing fibers impregnated with the matrix resin in a state of being oriented in a same direction; a second step of forming a cut of a predetermined pattern penetrating the base material in each of the plurality of prepared base materials; and a third step of stacking the plurality of base materials in which the cut is formed, in a state in which fiber directions, which are orientation directions of the reinforcing fibers contained in each of the base materials, are alternated, and molding the stacked base materials into a desired shape by pressing. Assuming that a direction perpendicular to the fiber direction is a fiber perpendicular direction, in the second step, as the cut, a plurality of cut lines are formed including a plurality of lengthwise cut lines extending along a plurality of lengthwise reference lines parallel to the fiber direction and aligned in the fiber perpendicular direction and a plurality of crosswise cut lines extending along a plurality of crosswise reference lines parallel to the fiber perpendicular direction and aligned in the fiber direction, and a plurality of cut interruption parts that interrupt the lengthwise cut lines in the fiber direction are formed on each of the lengthwise reference lines. Assuming that one of a pair of the lengthwise reference lines that are adjacent to each other is a first lengthwise reference line and another is a second lengthwise reference line, in the second step, the lengthwise cut lines are formed such that the cut interruption part on the first lengthwise reference line and the cut interruption part on the second lengthwise reference line are displaced from each other in the fiber direction.

According to this production method, since the plurality of base material sheets stacked so that the fiber directions are alternated are pressed, the directions of the reinforcing fibers contained in the processed molded article are not uniformly determined, and pseudo isotropy is imparted to the mechanical properties of the molded article. As a result, a preferable reinforcing effect by the reinforcing fibers can be obtained.

Since the cut including the lengthwise cut lines extending in the fiber direction and the crosswise cut lines extending in the fiber perpendicular direction is formed on the base material before the pressing, the flow of the resin during the pressing can be facilitated to increase the degree of freedom of shape of the molded article. Specifically, due to the crosswise cut lines cutting the reinforcing fibers in the base material, the fiber length of the reinforcing fibers is shortened, and as a result, the degree to which the reinforcing fibers inhibit the flow of the resin can be reduced. Due to this, the formativeness of the base materials, i.e., the deformability of the base materials to be deformed following the shape (molding cavity) of the press mold can be improved, and the degree of freedom of shape of the molded article can be satisfactorily ensured. On the other hand, the lengthwise cut lines do not cut the reinforcing fibers, but reduce the integrity of the base material, which eventually contributes to improvement of formativeness. By forming such the lengthwise cut lines in addition to the crosswise cut lines, the number of crosswise cut lines required to obtain the required formativeness can be reduced as compared with the case where only the crosswise cut lines are formed. Due to this, it becomes unnecessary to extremely subdivide the reinforcing fibers, so that a good reinforcing effect by the reinforcing fibers can be obtained.

In particular, in the production method, since the cut interruption parts that interrupt the lengthwise cut lines in the fiber direction are arranged in a staggered manner (i.e., the positions of the cut interruption parts on the adjacent lengthwise reference lines are displaced from each other in the fiber direction), a kind of randomness can be imparted to the formation pattern of the lengthwise cut lines and the cut interruption parts. Due to this, for example, as compared with a case where the lengthwise cut lines are formed such that the cut interruption parts are aligned in a straight line along the fiber perpendicular direction, the flow of the resin during pressing can be further smoothed, and the formativeness can be more effectively improved.

Preferably, in the production method, when any one of the crosswise cut lines is defined as a first crosswise cut line, and another crosswise cut line facing the first crosswise cut line in the fiber direction is defined as a second crosswise cut line, lengthwise cut lines on the first lengthwise reference line have a first lengthwise cut line that is interrupted via the cut interruption part from the first crosswise cut line and is continuous with the second crosswise cut line, and lengthwise cut lines on the second lengthwise reference line have a second lengthwise cut line that is interrupted via the cut interruption part from the second crosswise cut line and is continuous with the first crosswise cut line.

According to this method, the staggered arrangement of the cut interruption parts can be specifically achieved.

In the above method, more preferably, each of the first crosswise cut line and the second crosswise cut line is formed so as to continuously extend from an end part on one side to an end part on the other side in the fiber perpendicular direction in the base material.

Thus, when continuously forming the crosswise cut lines over substantially the entire width of the base material, it is possible to reduce the number of crosswise cut lines in the entire base material as compared with the case where the crosswise cut lines are intermittently formed along the fiber perpendicular direction, and it is possible to enhance the degree of freedom of shape of the molded article while simplifying the cut pattern.

Here, the formation pattern of the cut may be as follows. That is, when any one of the crosswise cut lines is defined as a first crosswise cut line, and another crosswise cut line facing the first crosswise cut line in the fiber direction is defined as a second crosswise cut line, lengthwise cut lines on the first lengthwise reference line include a first lengthwise cut line intersecting the first crosswise cut line, a second lengthwise cut line positioned between the first crosswise cut line and the second crosswise cut line and interrupted via the cut interruption part from the first lengthwise cut line, and a third lengthwise cut line intersecting the second crosswise cut line and interrupted via the cut interruption part from the second lengthwise cut line, lengthwise cut lines on the second lengthwise reference line include a fourth lengthwise cut line intersecting the first crosswise cut line, and a fifth lengthwise cut line intersecting the second crosswise cut line and interrupted via the cut interruption part from the fourth lengthwise cut line, and lengthwise cut lines on a third lengthwise reference line adjacent to the second lengthwise reference line include a sixth lengthwise cut line intersecting the first crosswise cut line, a seventh lengthwise cut line positioned between the first crosswise cut line and the second crosswise cut line and interrupted via the cut interruption part from the sixth lengthwise cut line, and an eighth lengthwise cut line intersecting the second crosswise cut line and interrupted via the cut interruption part from the seventh lengthwise cut line.

This method can also achieve the staggered arrangement of the cut interruption parts and increase the degree of freedom of shape of the molded article.

Assuming that one of a pair of the crosswise reference lines that are adjacent to each other is a first crosswise reference line and the other is a second crosswise reference line, it is preferable that a plurality of the crosswise cut lines are intermittently formed on the first crosswise reference line and the second crosswise reference line, and the plurality of crosswise cut lines on the first crosswise reference line and the plurality of crosswise cut lines on the second crosswise reference line are arranged in a staggered manner such that positions on the fiber perpendicular direction are different from each other.

Thus, when not only the cut interruption parts that interrupt the lengthwise cut lines are arranged in a staggered manner but also the crosswise cut lines are arranged in a staggered manner, as compared with the case where the crosswise cut lines continuous over substantially the entire width of the base material are formed, the randomness of the cut pattern and the continuity of the material increase, and as a result, the strength of the molded article can be further enhanced.

Preferably, in the third step, at least a first base material set in which a plurality of base materials including the base material in which the fiber direction is set in a first direction and the base material in which the fiber direction is set in a second direction different from the first direction are stacked and a second base material set in which a plurality of base materials including the base material in which the fiber direction is set in the first direction and the base material in which the fiber direction is set in the second direction are stacked are formed, and the first base material set and the second base material set are stacked while displacing positions thereof in plan view such that the lengthwise cut lines and the crosswise cut lines of each base material included in the first base material set and the lengthwise cut lines and the crosswise cut lines of each base material included in the second base material set do not linearly superimpose each other in plan view.

According to this method, the positions where the reinforcing fibers are cut by the lengthwise cut lines or the crosswise cut lines varies for each base material set, and thus when the stacked base material sets are pressed, the reinforcing effect by the reinforcing fibers can be more uniformly exhibited in the molded article, and the strength of the molded article can be effectively improved.

In the second step, a plurality of the lengthwise cut lines can be formed along the plurality of lengthwise reference lines aligned at a constant first pitch, and a plurality of the crosswise cut lines can be formed along the plurality of crosswise reference lines aligned at a constant second pitch. In this case, preferably, assuming that the fiber direction of the uppermost base material in the first base material set is a lengthwise direction and the fiber perpendicular direction of the base material is a crosswise direction, in the third step, the first base material set and the second base material set are stacked in a state of being displaced by a first distance in the lengthwise direction and displaced by a second distance in the crosswise direction in plan view. The first distance is set to a value different from the second pitch, and the second distance is set to a value different from the first pitch.

According to this method, it is possible to effectively avoid the lengthwise cut lines and the crosswise cut lines from linearly superimposing each other in plan view between the base material sets adjacent vertically, and to appropriately exhibit the above-described effects.

A fiber-reinforced resin sheet according to another aspect of the present invention includes a thermoplastic matrix resin, and a large number of reinforcing fibers impregnated with the matrix resin in a state of being oriented in a same direction, and is formed with a cut having a predetermined pattern and penetrating in a thickness direction. Assuming that an orientation direction of the reinforcing fibers is a fiber direction and a direction perpendicular to the fiber direction is a fiber perpendicular direction, the cut includes a plurality of lengthwise cut lines extending along a plurality of lengthwise reference lines parallel to the fiber direction and aligned in the fiber perpendicular direction, and a plurality of crosswise cut lines extending along a plurality of crosswise reference lines parallel to the fiber perpendicular direction and aligned in the fiber direction. The plurality of lengthwise cut lines are interrupted from each other via a plurality of cut interruption parts formed on the lengthwise reference line. Assuming that one of a pair of the lengthwise reference lines that are adjacent to each other is a first lengthwise reference line and another is a second lengthwise reference line, the lengthwise cut lines are formed such that the cut interruption part on the first lengthwise reference line and the cut interruption part on the second lengthwise reference line are displaced from each other in the fiber direction.

This fiber-reinforced resin sheet contributes to the production of a molded article having high strength and a high degree of freedom of shape, for example, by being subjected to the above-described production method.

The following specific examples of the cut pattern are preferable. That is, when any one of the crosswise cut lines is defined as a first crosswise cut line, and another crosswise cut line facing the first crosswise cut line in the fiber direction is defined as a second crosswise cut line, lengthwise cut lines on the first lengthwise reference line have a first lengthwise cut line that is interrupted via the cut interruption part from the first crosswise cut line and is continuous with the second crosswise cut line, and lengthwise cut lines on the second lengthwise reference line have a second lengthwise cut line that is interrupted via the cut interruption part from the second crosswise cut line and is continuous with the first crosswise cut line.

In this case, it is preferable that each of the first crosswise cut line and the second crosswise cut line is formed so as to continuously extend from an end part on one side to an end part on the other side in the fiber perpendicular direction in the base material.

The cut pattern may also be as follows. That is, when any one of the crosswise cut lines is defined as a first crosswise cut line, and another crosswise cut line facing the first crosswise cut line in the fiber direction is defined as a second crosswise cut line, lengthwise cut lines on the first lengthwise reference line include a first lengthwise cut line intersecting the first crosswise cut line, a second lengthwise cut line positioned between the first crosswise cut line and the second crosswise cut line and interrupted via the cut interruption part from the first lengthwise cut line, and a third lengthwise cut line intersecting the second crosswise cut line and interrupted via the cut interruption part from the second lengthwise cut line, lengthwise cut lines on the second lengthwise reference line include a fourth lengthwise cut line intersecting the first crosswise cut line, and a fifth lengthwise cut line intersecting the second crosswise cut line and interrupted via the cut interruption part from the fourth lengthwise cut line, and lengthwise cut lines on a third lengthwise reference line adjacent to the second lengthwise reference line include a sixth lengthwise cut line intersecting the first crosswise cut line, a seventh lengthwise cut line positioned between the first crosswise cut line and the second crosswise cut line and interrupted via the cut interruption part from the sixth lengthwise cut line, and an eighth lengthwise cut line intersecting the second crosswise cut line and interrupted via the cut interruption part from the seventh lengthwise cut line.

In this case, assuming that one of a pair of the crosswise reference lines that are adjacent to each other is a first crosswise reference line and the other is a second crosswise reference line, it is preferable that a plurality of the crosswise cut lines are intermittently formed on the first crosswise reference line and the second crosswise reference line, and a plurality of the crosswise cut lines on the first crosswise reference line and the plurality of crosswise cut lines on the second crosswise reference line are arranged in a staggered manner such that positions on the fiber perpendicular direction are different from each other.

A stacked body of a fiber-reinforced resin sheet according to yet another aspect of the present invention is a stacked body in which a plurality of the fiber-reinforced resin sheets described above are stacked. A plurality of the fiber-reinforced resin sheets are stacked in a state where the fiber directions are alternated, and thermally fused to one another.

Since this stacked body of fiber-reinforced resin sheets has a thickness corresponding to a thickness of a plurality of the fiber-reinforced resin sheets described above, it is suitable for producing a relatively thick molded article.

The following specific examples of the structure of the stacked body are preferable. That is, the stacked body includes a first sheet set in which a plurality of fiber-reinforced resin sheets including the fiber-reinforced resin sheet in which the fiber direction is set to a first direction and the fiber-reinforced resin sheet in which the fiber direction is set to a second direction different from the first direction are stacked, and a second sheet set in which a plurality of fiber-reinforced resin sheets including the fiber-reinforced resin sheet in which the fiber direction is set to the first direction and the fiber-reinforced resin sheet in which the fiber direction is set to the second direction are stacked. The first sheet set and the second sheet set are stacked while displacing positions thereof in plan view such that the lengthwise cut lines and the crosswise cut lines of each of the fiber-reinforced resin sheets included in the first sheet set and the lengthwise cut lines and the crosswise cut lines of each of the fiber-reinforced resin sheets included in the second sheet set do not linearly superimpose one another in plan view.

Each of the fiber-reinforced resin sheets can include a plurality of the lengthwise cut lines formed along a plurality of the lengthwise reference lines aligned at a constant first pitch, and a plurality of the crosswise cut lines formed along a plurality of the crosswise reference lines aligned at a constant second pitch. In this case, preferably, assuming that the fiber direction of the uppermost fiber-reinforced resin sheet in the first sheet set is a lengthwise direction and the fiber perpendicular direction of the fiber-reinforced resin sheet is a crosswise direction, the first sheet set and the second sheet set are stacked in a state of being displaced by a first distance in the lengthwise direction and displaced by a second distance in the crosswise direction in plan view. The first distance is set to a value different from the second pitch, and the second distance is set to a value different from the first pitch.

## Claims

1. A fiber-reinforced resin sheet which is provided with a thermoplastic matrix resin and a large number of reinforcing fibers impregnated with the matrix resin in a state of being oriented in a same direction, and is formed with a cut having a predetermined pattern and penetrating in a thickness direction,
wherein assuming that an orientation direction of the reinforcing fibers is a fiber direction and a direction perpendicular to the fiber direction is a fiber perpendicular direction, the cut includes a plurality of lengthwise cut lines extending along a plurality of lengthwise reference lines parallel to the fiber direction and aligned in the fiber perpendicular direction, and a plurality of crosswise cut lines extending along a plurality of crosswise reference lines parallel to the fiber perpendicular direction and aligned in the fiber direction,
the plurality of lengthwise cut lines are interrupted from each other via a plurality of cut interruption parts formed on the lengthwise reference line, and
assuming that one of a pair of the lengthwise reference lines that are adjacent to each other is a first lengthwise reference line and another is a second lengthwise reference line, the lengthwise cut lines are formed such that the cut interruption part on the first lengthwise reference line and the cut interruption part on the second lengthwise reference line are displaced from each other in the fiber direction.

2. The fiber-reinforced resin sheet according to claim 1, wherein
when any one of the crosswise cut lines is defined as a first crosswise cut line, and another crosswise cut line facing the first crosswise cut line in the fiber direction is defined as a second crosswise cut line, lengthwise cut lines on the first lengthwise reference line have a first lengthwise cut line that is interrupted via the cut interruption part from the first crosswise cut line and is continuous with the second crosswise cut line, and
lengthwise cut lines on the second lengthwise reference line have a second lengthwise cut line that is interrupted via the cut interruption part from the second crosswise cut line and is continuous with the first crosswise cut line.

3. The fiber-reinforced resin sheet according to claim 2, wherein each of the first crosswise cut line and the second crosswise cut line is formed so as to continuously extend from an end part on one side to an end part on another side in the fiber perpendicular direction in the fiber-reinforced resin sheet.

4. The fiber-reinforced resin sheet according to claim 1, wherein
when any one of the crosswise cut lines is defined as a first crosswise cut line, and another crosswise cut line facing the first crosswise cut line in the fiber direction is defined as a second crosswise cut line, lengthwise cut lines on the first lengthwise reference line include a first lengthwise cut line intersecting the first crosswise cut line, a second lengthwise cut line positioned between the first crosswise cut line and the second crosswise cut line and interrupted via the cut interruption part from the first lengthwise cut line, and a third lengthwise cut line intersecting the second crosswise cut line and interrupted via the cut interruption part from the second lengthwise cut line,
lengthwise cut lines on the second lengthwise reference line include a fourth lengthwise cut line intersecting the first crosswise cut line, and a fifth lengthwise cut line intersecting the second crosswise cut line and interrupted via the cut interruption part from the fourth lengthwise cut line, and
lengthwise cut lines on a third lengthwise reference line adjacent to the second lengthwise reference line include a sixth lengthwise cut line intersecting the first crosswise cut line, a seventh lengthwise cut line positioned between the first crosswise cut line and the second crosswise cut line and interrupted via the cut interruption part from the sixth lengthwise cut line, and an eighth lengthwise cut line intersecting the second crosswise cut line and interrupted via the cut interruption part from the seventh lengthwise cut line.

5. The fiber-reinforced resin sheet according to claim 4, wherein
assuming that one of a pair of the crosswise reference lines that are adjacent to each other is a first crosswise reference line and the other is a second crosswise reference line, a plurality of the crosswise cut lines are intermittently formed on the first crosswise reference line and the second crosswise reference line, and
a plurality of the crosswise cut lines on the first crosswise reference line and the plurality of crosswise cut lines on the second crosswise reference line are arranged in a staggered manner such that positions on the fiber perpendicular direction are different from each other.

6. A stacked body in which a plurality of the fiber-reinforced resin sheets according to any one of claims 1 to 5 are stacked, wherein
a plurality of the fiber-reinforced resin sheets are stacked in a state where the fiber directions are alternated, and thermally fused to one another.

7. The stacked body of fiber-reinforced resin sheets according to claim 6, comprising:
a first sheet set in which a plurality of fiber-reinforced resin sheets including the fiber-reinforced resin sheet in which the fiber direction is set to a first direction and the fiber-reinforced resin sheet in which the fiber direction is set to a second direction different from the first direction are stacked; and
a second sheet set in which a plurality of fiber-reinforced resin sheets including the fiber-reinforced resin sheet in which the fiber direction is set to the first direction and the fiber-reinforced resin sheet in which the fiber direction is set to the second direction are stacked,
wherein the first sheet set and the second sheet set are stacked while displacing positions thereof in plan view such that the lengthwise cut lines and the crosswise cut lines of each of the fiber-reinforced resin sheets included in the first sheet set and the lengthwise cut lines and the crosswise cut lines of each of the fiber-reinforced resin sheets included in the second sheet set do not linearly superimpose one another in plan view.

8. The stacked body of fiber-reinforced resin sheets according to claim 7, wherein
each of the fiber-reinforced resin sheets includes a plurality of the lengthwise cut lines formed along a plurality of the lengthwise reference lines aligned at a constant first pitch, and a plurality of the crosswise cut lines formed along a plurality of the crosswise reference lines aligned at a constant second pitch,
assuming that the fiber direction of the uppermost fiber-reinforced resin sheet in the first sheet set is a lengthwise direction and the fiber perpendicular direction of the fiber-reinforced resin sheet is a crosswise direction, the first sheet set and the second sheet set are stacked in a state of being displaced by a first distance in the lengthwise direction and displaced by a second distance in the crosswise direction in plan view, and
the first distance is set to a value different from the second pitch, and the second distance is set to a value different from the first pitch.

9. A method for producing a fiber-reinforced resin molded article, comprising:
a first step of preparing a plurality of sheet-shaped base materials containing a thermoplastic matrix resin and a large number of reinforcing fibers impregnated with the matrix resin in a state of being oriented in a same direction;
a second step of forming a cut of a predetermined pattern penetrating the base material in each of the plurality of prepared base materials; and
a third step of stacking the plurality of base materials in which the cut is formed, in a state in which fiber directions, which are orientation directions of the reinforcing fibers contained in each of the base materials, are alternated, and molding the stacked base materials into a desired shape by pressing,
wherein assuming that a direction perpendicular to the fiber direction is a fiber perpendicular direction, in the second step, as the cut, a plurality of cut lines are formed including a plurality of lengthwise cut lines extending along a plurality of lengthwise reference lines parallel to the fiber direction and aligned in the fiber perpendicular direction and a plurality of crosswise cut lines extending along a plurality of crosswise reference lines parallel to the fiber perpendicular direction and aligned in the fiber direction, and a plurality of cut interruption parts that interrupt the lengthwise cut lines in the fiber direction are formed on each of the lengthwise reference lines, and
assuming that one of a pair of the lengthwise reference lines that are adjacent to each other is a first lengthwise reference line and another is a second lengthwise reference line, in the second step, the lengthwise cut lines are formed such that the cut interruption part on the first lengthwise reference line and the cut interruption part on the second lengthwise reference line are displaced from each other in the fiber direction.

10. The method for producing a fiber-reinforced resin molded article according to claim 9, wherein
when any one of the crosswise cut lines is defined as a first crosswise cut line, and another crosswise cut line facing the first crosswise cut line in the fiber direction is defined as a second crosswise cut line, lengthwise cut lines on the first lengthwise reference line have a first lengthwise cut line that is interrupted via the cut interruption part from the first crosswise cut line and is continuous with the second crosswise cut line, and
lengthwise cut lines on the second lengthwise reference line have a second lengthwise cut line that is interrupted via the cut interruption part from the second crosswise cut line and is continuous with the first crosswise cut line.

11. The method for producing a fiber-reinforced resin molded article according to claim 10, wherein each of the first crosswise cut line and the second crosswise cut line is formed so as to continuously extend from an end part on one side to an end part on another side in the fiber perpendicular direction in the base material.

12. The method for producing a fiber-reinforced resin molded article according to claim 9, wherein
when any one of the crosswise cut lines is defined as a first crosswise cut line, and another crosswise cut line facing the first crosswise cut line in the fiber direction is defined as a second crosswise cut line, lengthwise cut lines on the first lengthwise reference line include a first lengthwise cut line intersecting the first crosswise cut line, a second lengthwise cut line positioned between the first crosswise cut line and the second crosswise cut line and interrupted via the cut interruption part from the first lengthwise cut line, and a third lengthwise cut line intersecting the second crosswise cut line and interrupted via the cut interruption part from the second lengthwise cut line,
lengthwise cut lines on the second lengthwise reference line include a fourth lengthwise cut line intersecting the first crosswise cut line, and a fifth lengthwise cut line intersecting the second crosswise cut line and interrupted via the cut interruption part from the fourth lengthwise cut line, and
lengthwise cut lines on a third lengthwise reference line adjacent to the second lengthwise reference line include a sixth lengthwise cut line intersecting the first crosswise cut line, a seventh lengthwise cut line positioned between the first crosswise cut line and the second crosswise cut line and interrupted via the cut interruption part from the sixth lengthwise cut line, and an eighth lengthwise cut line intersecting the second crosswise cut line and interrupted via the cut interruption part from the seventh lengthwise cut line.

13. The method for producing a fiber-reinforced resin molded article according to claim 12, wherein
assuming that one of a pair of the crosswise reference lines that are adjacent to each other is a first crosswise reference line and the other is a second crosswise reference line, a plurality of the crosswise cut lines are intermittently formed on the first crosswise reference line and the second crosswise reference line, and
a plurality of the crosswise cut lines on the first crosswise reference line and the plurality of crosswise cut lines on the second crosswise reference line are arranged in a staggered manner such that positions on the fiber perpendicular direction are different from each other.

14. The method for producing a fiber-reinforced resin molded article according to any one of claims 9 to 13, wherein
in the third step,
at least a first base material set in which a plurality of base materials including the base material in which the fiber direction is set in a first direction and the base material in which the fiber direction is set in a second direction different from the first direction are stacked and a second base material set in which a plurality of base materials including the base material in which the fiber direction is set in the first direction and the base material in which the fiber direction is set in the second direction are stacked are formed, and
the first base material set and the second base material set are stacked while displacing positions thereof in plan view such that the lengthwise cut lines and the crosswise cut lines of each base material included in the first base material set and the lengthwise cut lines and the crosswise cut lines of each base material included in the second base material set do not linearly superimpose each other in plan view.

15. The method for producing a fiber-reinforced resin molded article according to claim 14, wherein
in the second step, a plurality of the lengthwise cut lines are formed along the plurality of lengthwise reference lines aligned at a constant first pitch, and a plurality of the crosswise cut lines are formed along the plurality of crosswise reference lines aligned at a constant second pitch,
assuming that the fiber direction of the uppermost base material in the first base material set is a lengthwise direction and the fiber perpendicular direction of the base material is a crosswise direction, in the third step, the first base material set and the second base material set are stacked in a state of being displaced by a first distance in the lengthwise direction and displaced by a second distance in the crosswise direction in plan view, and
the first distance is set to a value different from the second pitch, and the second distance is set to a value different from the first pitch.
